# EUROPEAN PATENT SPECIFICATION

(11) **EP 4 398 094 B1**
(45) Date of publication and mention of the grant of the patent: **29.07.2026**
(21) Application number: 22871922.5
(22) Date of filing: 19.09.2022
(51) Int. Cl.: G06F 8/61, H04W 4/80

(54) **APPLICATION INSTALLATION METHOD AND RELATED DEVICES**
ANWENDUNGSINSTALLATIONSVERFAHREN UND ZUGEHÖRIGE VORRICHTUNGEN
PROCÉDÉ D'INSTALLATION D'APPLICATION ET DISPOSITIFS ASSOCIÉS

(30) Priority: 24.09.2021 CN 202111126103; 19.11.2021 CN 202111383611
(43) Date of publication of application: 10.07.2024
(73) Proprietor: Petal Cloud Technology Co., Ltd., Dongguan, Guangdong 523799 (CN)
(72) Inventor: CHEN, Minjiang, Dongguan, Guangdong 523799 (CN)
(74) Representative: Thun, Clemens
(86) International application number: PCT/CN2022/119661
(87) International publication number: WO 2023/045876

(56) References cited:
- CN-A- 104 850 463
- CN-A- 105 204 885
- CN-A- 105 389 175
- CN-A- 113 311 975
- US-A1- 2015 193 216
- US-A1- 2016 239 287
- US-A1- 2018 189 044

## Description

### TECHNICAL FIELD

This application relates to the field of communication technologies, and in particular, to an application installation method and a related device.

### BACKGROUND

As intelligent electronic devices (such as smartphones and tablet computers) are widely used, one user may have a plurality of intelligent electronic devices at the same time, and various functions of these intelligent electronic devices are usually implemented by using applications installed on the intelligent electronic devices.

However, currently, these intelligent electronic devices can only install an application for themselves, and cannot install an application across devices.If a user wants to install a same application on a plurality of devices, the user needs to perform a download and installation procedure on each device. This causes cumbersome operations and poor user experience.
The document US 2015/0193216 Al shows a method and system for installing applications.
The document US 2018/0189044 A1 shows methods and systems for managing application installation on electronic devices.

### SUMMARY

The present invention is defined by the independent claims. Further advantageous developments are shown by the dependent claims.

Embodiments of this application provide an application installation method and a related device, to implement cross-device application installation. This simplifies user operations, and improves user experience.

According to a first aspect, an embodiment of this application provides an application installation method applied to a first electronic device. The method includes: The first electronic device displays a first interface of an application market program, where the first interface includes an icon of a first application and a first option corresponding to the first application; the first electronic device detects a first operation performed by a user on the first option; in response to the first operation, the first electronic device displays a second interface of the application market program, where the second interface includes a second option identifying the first electronic device and a third option identifying a second electronic device, the third option is generated based on device information of the second electronic device, and the device information of the second electronic device is obtained by the first electronic device from a server or the second electronic device; the first electronic device detects a second operation of the user; and in response to the second operation, the first electronic device sends a first request to the second electronic device, where the first request indicates the second electronic device to install the first application corresponding to the second electronic device.

The application installation method provided in this embodiment of this application can resolve a problem of confusion of the user caused when the user uses an electronic device to search for an application to be installed and a same application applicable to a plurality of electronic devices of different types (such as a PC and a mobile phone) may be found. In addition, cross-device application installation is performed. This can resolve a problem that the user needs to perform a download and installation procedure on each device when the user wants to install a same application on a plurality of devices, thereby simplifying user operations and improving user experience.

In a possible implementation, before the first electronic device detects the second operation of the user, the method further includes: The first electronic device detects an operation performed by the user on the third option. In this way, the user may select an electronic device (for example, the second electronic device) to install the first application.

In a possible implementation, the second interface further includes a fourth option identifying a third electronic device, and before the first electronic device detects the second operation of the user, the method further includes: The first electronic device detects operations performed by the user on the third option and the fourth option; and in response to the second operation, the first electronic device further sends a second request to the third electronic device. The second request indicates the third electronic device to install the first application corresponding to the third electronic device. In this way, the user may simultaneously select a plurality of electronic devices (such as the second electronic device and the third electronic device) to install the first application.

In a possible implementation, before the first electronic device displays the first interface of the application market program, the method further includes: The first electronic device obtains a keyword entered by the user, and searches for the first application based on the keyword. In this way, the user may search for the first application by performing a search operation.

In a possible implementation, before the first electronic device detects the first operation performed by the user on the first option, the method further includes: The first electronic device logs in to a first account, where the first account is associated with a second electronic device; and the first electronic device obtains the device information of the second electronic device form the server. In this way, the first electronic device and the second electronic device may establish an association relationship by using the server, and obtain the device information of the second electronic device from the server.

In a possible implementation, that the first electronic device sends the first request to the second electronic device specifically includes: The first electronic device sends the first request to the second electronic device by using the server. The first request includes information about the first application corresponding to the second electronic device. In this way, when logging in to a same account, the first electronic device may send, to the second electronic device by using the server, the information about the first application corresponding to the second electronic device. Further, the second electronic device may download the first application based on the information about the first application corresponding to the second electronic device.

In a possible implementation, before the first electronic device displays the first interface of the application market program, the method further includes: The first electronic device establishes a short-range communication connection to the second electronic device; and the first electronic device obtains the device information of the second electronic device through the short-range communication connection. In this way, the first electronic device may establish a short-range communication connection to another nearby electronic device (for example, the second electronic device), and obtain device information of the another nearby electronic device (for example, the second electronic device).

In a possible implementation, that the first electronic device sends the first request to the second electronic device specifically includes: The first electronic device sends the first request to the second electronic device based on the short-range communication connection. The first request includes information about the first application corresponding to the second electronic device. In this way, when the short-range communication connection is established, the first electronic device may send, to the second electronic device, the information about the first application corresponding to the second electronic device. Further, the second electronic device may download the first application based on the information about the first application corresponding to the second electronic device.

In a possible implementation, before the first electronic device displays the second interface of the application market program, the method further includes: The first electronic device sends a third request to the server, where the third request is used to obtain information about the first application from the server; and the first electronic device receives the information about the first application sent by the server, where the information about the first application includes information about the first application corresponding to the first electronic device and the information about the first application corresponding to the second electronic device. In this way, the first electronic device may obtain the information about the first application from the server.

In a possible implementation, the third request includes the device information of the second electronic device and device information of the first electronic device.

In a possible implementation, the second interface further includes status information of the first application, and the status information of the first application includes indication information indicating that the first application is installed, or indication information indicating that the first application is not installed. In this way, the first electronic device may obtain an electronic device on which the first application is installed/not installed.

In a possible implementation, the method further includes: The first electronic device receives a message that is sent by the second electronic device and that indicates that the first application is successfully installed, and displays indication information indicating that the second electronic device successfully installs the first application. In this way, the first electronic device may be notified that the first application is successfully installed on the second electronic device.

In a possible implementation, the second interface further includes installation progress information of the first application. In this way, the first electronic device may display the installation progress information of the first application, so that the user can learn of the installation progress information in time.

According to a second aspect, an embodiment of this application provides an application installation method applied to a communication system including a first electronic device and a second electronic device. The method includes: The first electronic device displays a first interface of an application market program, where the first interface includes an icon of a first application and a first option corresponding to the first application; the first electronic device detects a first operation performed by a user on the first option; in response to the first operation, the first electronic device displays a second interface of the application market program, where the second interface includes a second option identifying the first electronic device and a third option identifying the second electronic device, the third option is generated based on device information of the second electronic device, and the device information of the second electronic device is obtained by the first electronic device from a server or the second electronic device; the first electronic device detects a second operation of the user; and in response to the second operation, the first electronic device sends a first request to the second electronic device, where the first request indicates to install the first application corresponding to the second electronic device; the second electronic device receives the first request; and the second electronic device obtains, based on the first request, information about the first application corresponding to the second electronic device and downloads the first application.

In a possible implementation, before the first electronic device detects the second operation of the user, the method further includes: The first electronic device detects an operation performed by the user on the third option.

In a possible implementation, the second interface further includes a fourth option identifying a third electronic device, and before the first electronic device detects the second operation of the user, the method further includes: The first electronic device detects operations performed by the user on the third option and the fourth option; and in response to the second operation, the first electronic device further sends a second request to the third electronic device. The second request indicates the third electronic device to install the first application corresponding to the third electronic device.

In a possible implementation, before the first electronic device displays the first interface of the application market program, the method further includes: The first electronic device obtains a keyword entered by the user, and searches for the first application based on the keyword.

In a possible implementation, before the first electronic device detects the first operation performed by the user on the first option, the method further includes: The first electronic device and the second electronic device log in to a first account.

In a possible implementation, that the first electronic device sends the first request to the second electronic device specifically includes: The first electronic device sends the first request to the second electronic device by using the server. The first request includes the information about the first application corresponding to the second electronic device.

In a possible implementation, the communication system further includes the server, and before the first electronic device detects the first operation performed by the user on the first option, the method further includes: The first electronic device sends, to the server, a request for obtaining the device information of the second electronic device; and the server receives the request and sends the device information of the second electronic device to the first electronic device. The device information of the second electronic device is obtained by the server after the second electronic device logs in to the first account.

In a possible implementation, before the first electronic device displays the first interface of the application market program, the method further includes: The first electronic device establishes a short-range communication connection to the second electronic device.

In a possible implementation, before the first electronic device displays the first interface of the application market program, the method further includes: The first electronic device and the second electronic device log in to a same account or different accounts.

In a possible implementation, that the first electronic device sends the first request to the second electronic device specifically includes: The first electronic device sends the first request to the second electronic device based on the short-range communication connection. The first request includes the information about the first application corresponding to the second electronic device.

In a possible implementation, before the first electronic device displays the second interface of the application market program, the method further includes: The first electronic device sends, to the second electronic device, a request for obtaining the device information of the second electronic device; and the second electronic device receives the request and sends the device information of the second electronic device to the first electronic device.

In a possible implementation, before the first electronic device displays the second interface of the application market program, the method further includes: The first electronic device sends a third request to the server, where the third request is used to obtain information about the first application from the server; the server receives the third request, and sends the information about the first application to the first electronic device, where the information about the first application includes information about the first application corresponding to the first electronic device and the information about the first application corresponding to the second electronic device; and the first electronic device receives the information about the first application.

In a possible implementation, the third request includes the device information of the second electronic device and device information of the first electronic device.

In a possible implementation, the second interface further includes status information of the first application, and the status information of the first application includes indication information indicating that the first application is installed, or indication information indicating that the first application is not installed.

In a possible implementation, the method further includes: The second electronic device sends, to the first electronic device, a message indicating that the first application is successfully installed; and the first electronic device receives the message, and displays indication information indicating that the second electronic device successfully installs the first application.

In a possible implementation, the second interface further includes installation progress information of the first application.

In a possible implementation, before the second electronic device downloads the first application, the method further includes: The second electronic device displays first prompt information, where the first prompt information prompts the user to download the first application; and the second electronic device detects an operation of downloading the first application by the user.

In a possible implementation, the method further includes: The second electronic device installs the first application; after the second electronic device installs the first application, the second electronic device sends, to the first electronic device, a message indicating that the first application is successfully installed; and the first electronic device receives the message, and displays indication information indicating that the second electronic device successfully installs the first application.

According to a third aspect, an embodiment of this application provides an application installation method applied to a second electronic device. The method includes: The second electronic device receives a first request sent by a first electronic device; and the second electronic device obtains, based on the first request, information about a first application corresponding to the second electronic device and downloads the first application. The first request indicates the second electronic device to install the first application corresponding to the second electronic device.

In a possible implementation, before the second electronic device receives the first request sent by the first electronic device, the method further includes: The second electronic device logs in to a first account, where the first account is associated with the first electronic device.

In a possible implementation, that the second electronic device receives the first request sent by the first electronic device specifically includes: The second electronic device receives the first request sent by the first electronic device by using a server. The first request includes the information about the first application corresponding to the second electronic device.

In a possible implementation, before the second electronic device receives the first request sent by the first electronic device, the method further includes: The second electronic device establishes a short-range communication connection to the first electronic device.

In a possible implementation, that the second electronic device receives the first request sent by the first electronic device specifically includes: The second electronic device receives, based on the short-range communication connection, the first request sent by the first electronic device. The first request includes the information about the first application corresponding to the second electronic device.

In a possible implementation, before the second electronic device receives the first request sent by the first electronic device, the method further includes: The second electronic device receives a request that is sent by the first electronic device and that is for obtaining device information of the second electronic device; and the second electronic device sends the device information of the second electronic device to the first electronic device.

In a possible implementation, before the second electronic device downloads the first application, the method further includes: The second electronic device displays first prompt information, where the first prompt information prompts a user to download the first application; and the second electronic device detects an operation of downloading the first application by the user.

In a possible implementation, the method further includes: The second electronic device installs the first application; and after the second electronic device successfully installs the first application, the second electronic device sends, to the first electronic device, a message indicating that the first application is successfully installed.

According to a fourth aspect, an embodiment of this application provides an electronic device. The electronic device includes one or more processors and one or more memories. The one or more memories are coupled to the one or more processors, the one or more memories are configured to store computer program code, and the computer program code includes computer instructions. When the one or more processors execute the computer instructions, the electronic device is enabled to perform the method in any possible implementation of the first aspect or the third aspect.

According to a fifth aspect, an embodiment of this application provides a computer storage medium. The computer storage medium stores a computer program. The computer program includes program instructions. When the program instructions are run on an electronic device, the electronic device is enabled to perform the method in any possible implementation of the first aspect or the third aspect.

According to a sixth aspect, an embodiment of this application provides a computer program product. When the computer program product runs on a computer, the computer is enabled to perform the method in any possible implementation of the first aspect or the third aspect.

### BRIEF DESCRIPTION OF DRAWINGS

FIG. 1A to FIG. 1F are schematic diagrams of a group of user interfaces according to an embodiment of this application;
FIG. 2 is a schematic diagram of an architecture of a communication system according to an embodiment of this application;

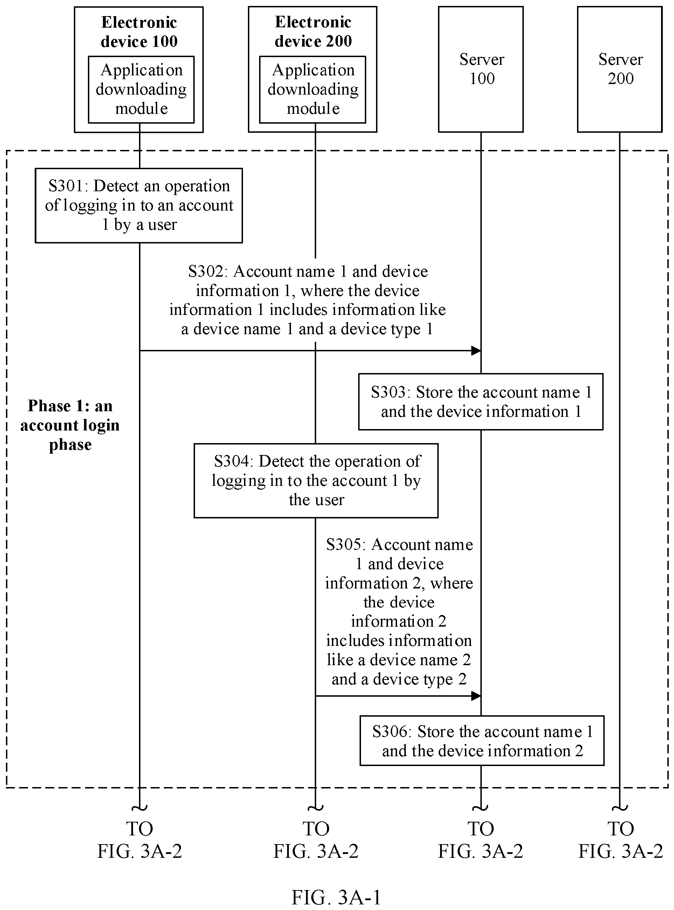

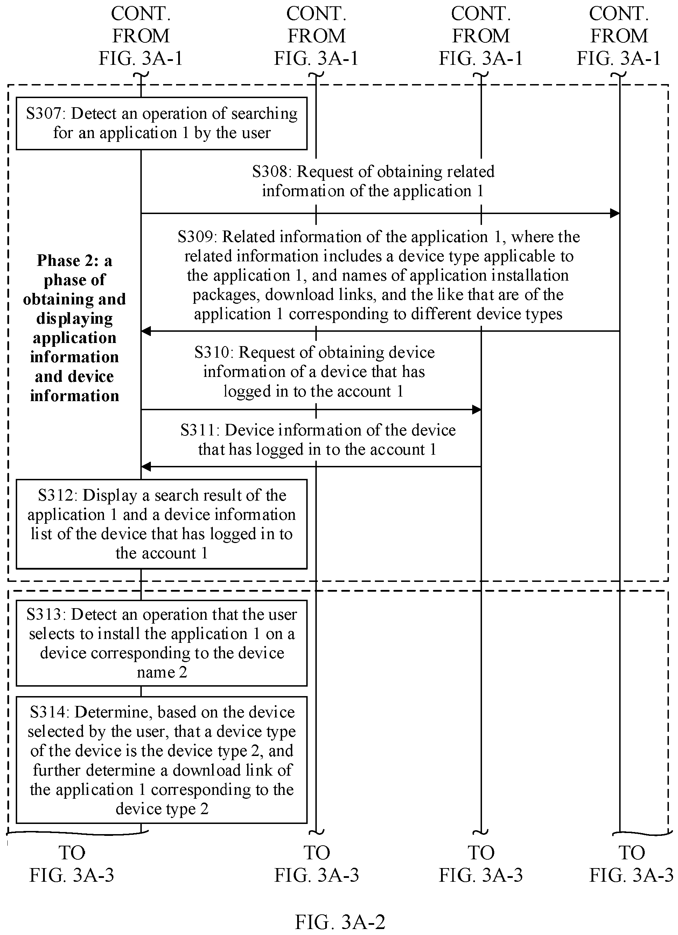

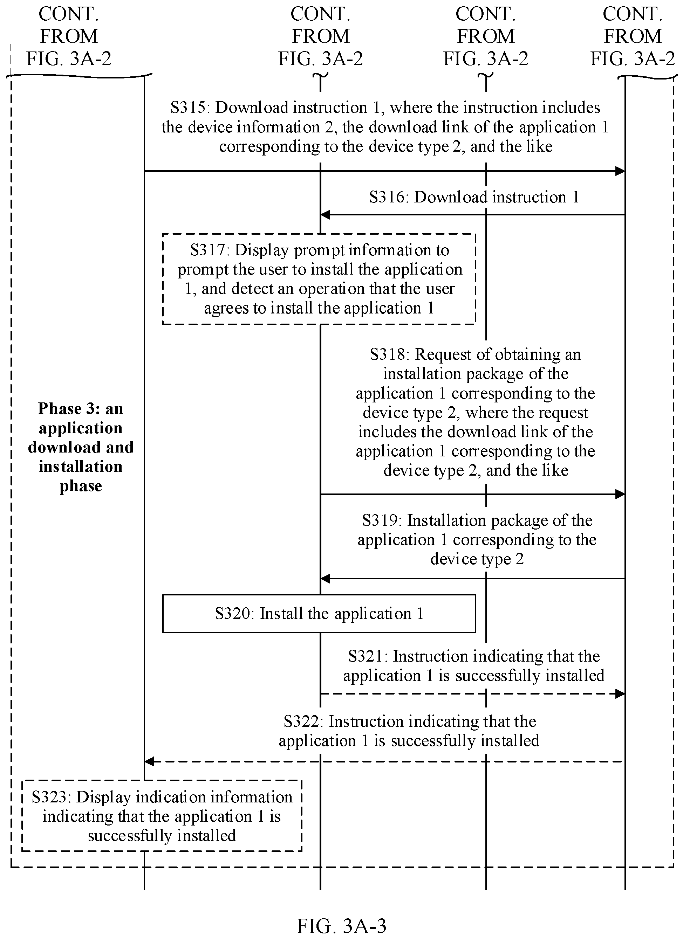

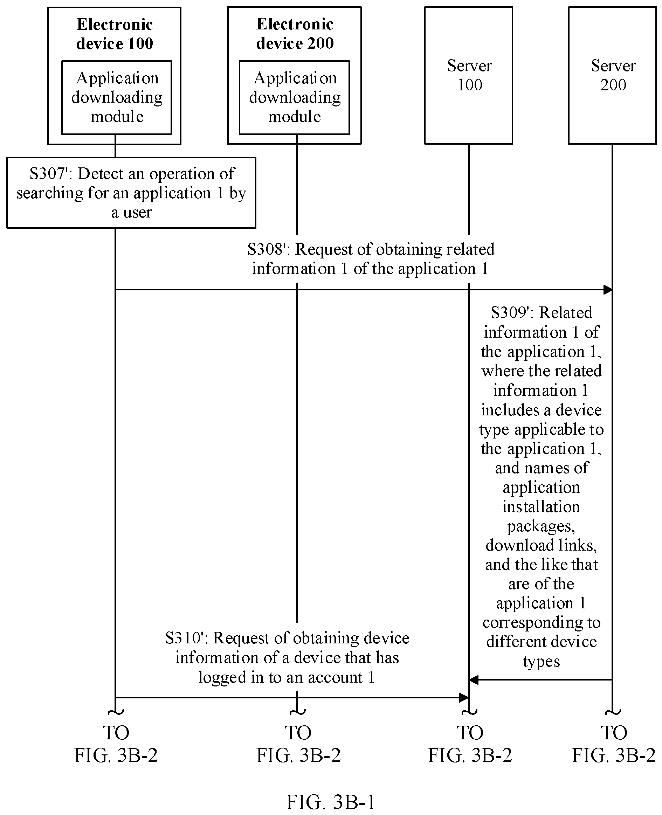

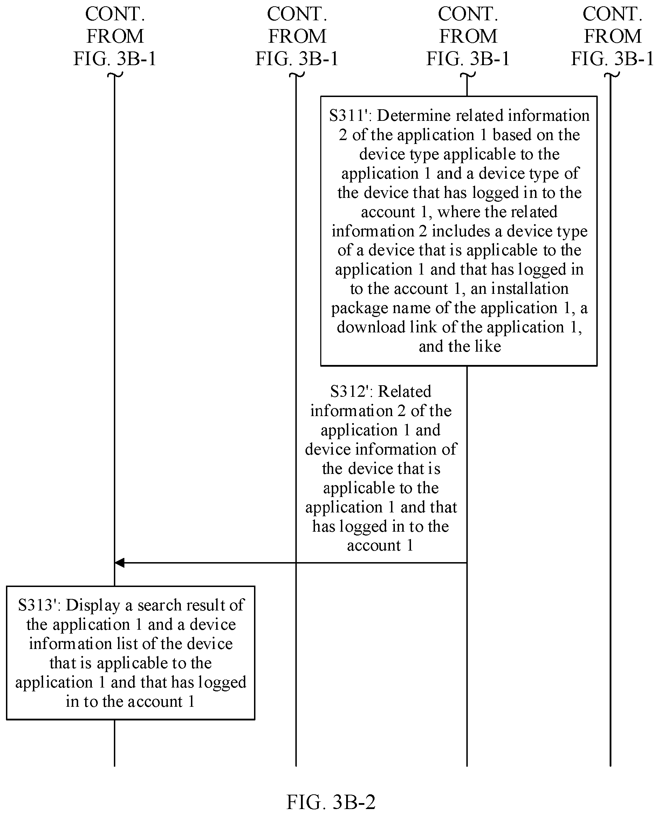

FIG. 3A-1 to FIG. 3A-3 are a schematic flowchart of an application installation method according to an embodiment of this application;
FIG. 3B-1 and FIG. 3B-2 are a schematic flowchart of another implementation of a phase 2 in the application installation method shown in FIG. 3A-1 to FIG. 3A-3 according to an embodiment of this application;

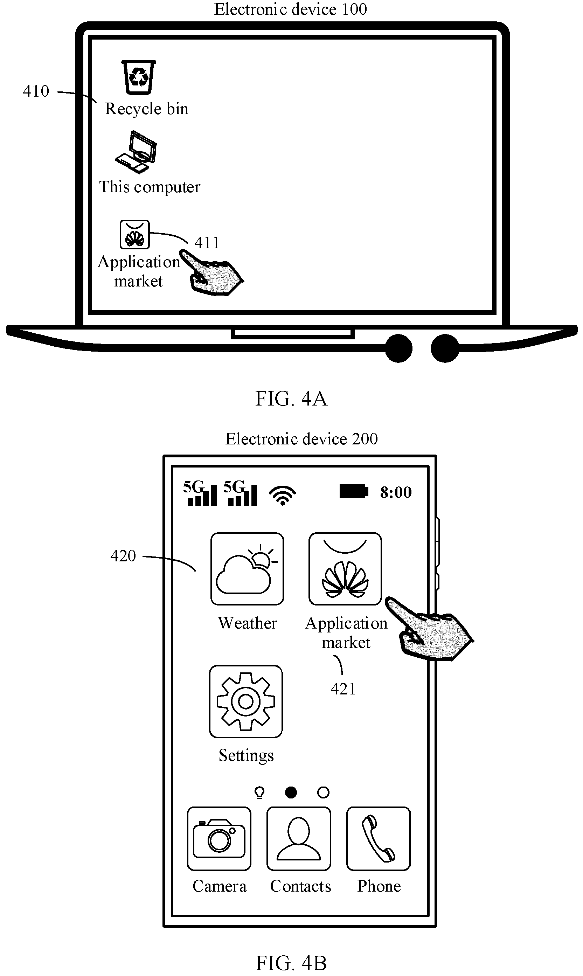

FIG. 4A to FIG. 4M are schematic diagrams of another group of user interfaces according to an embodiment of this application;

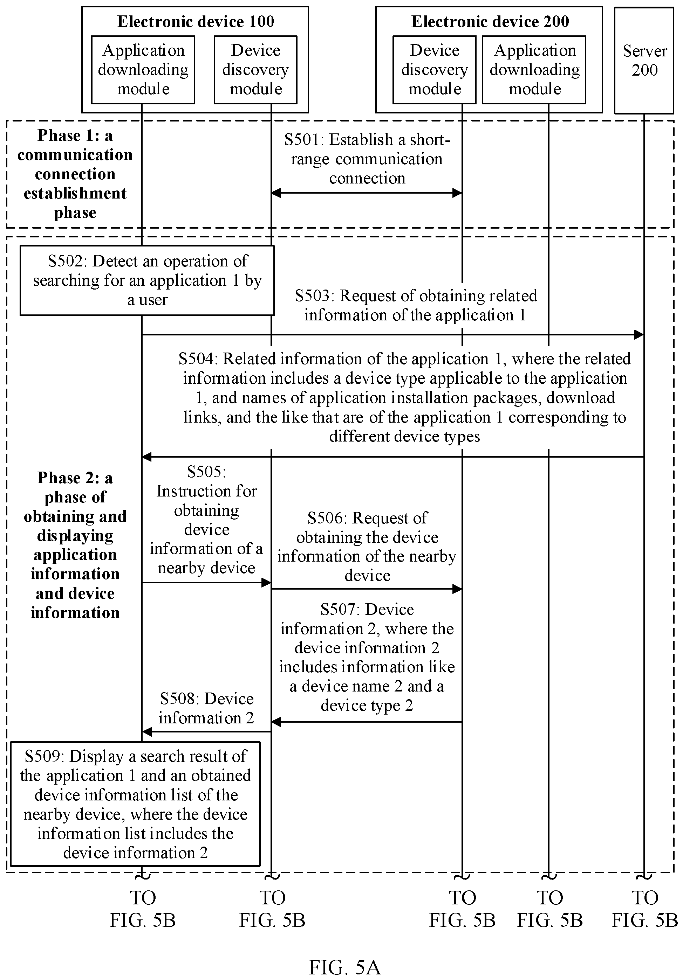

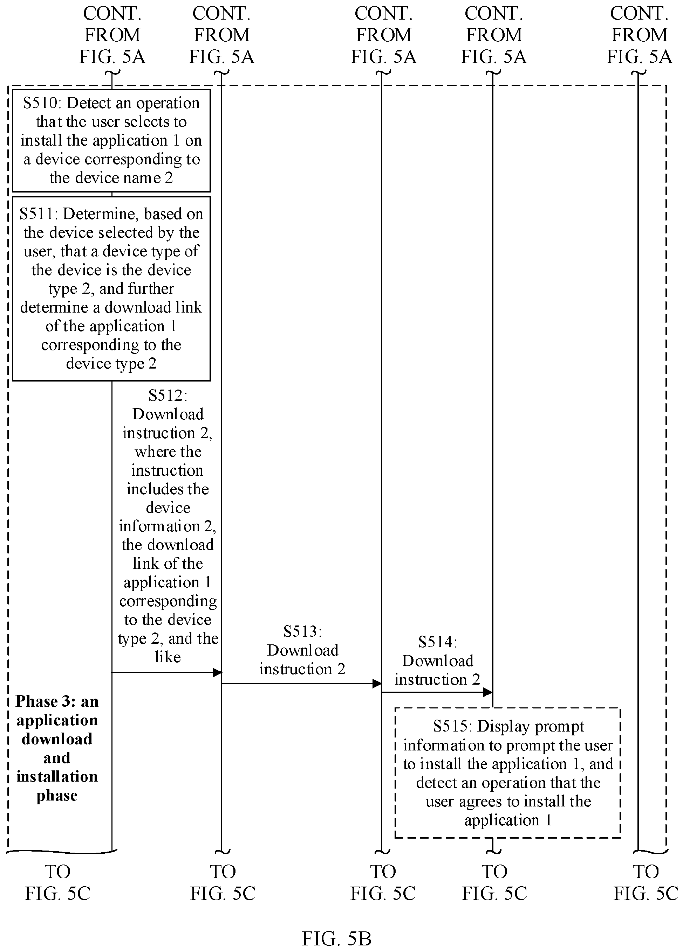

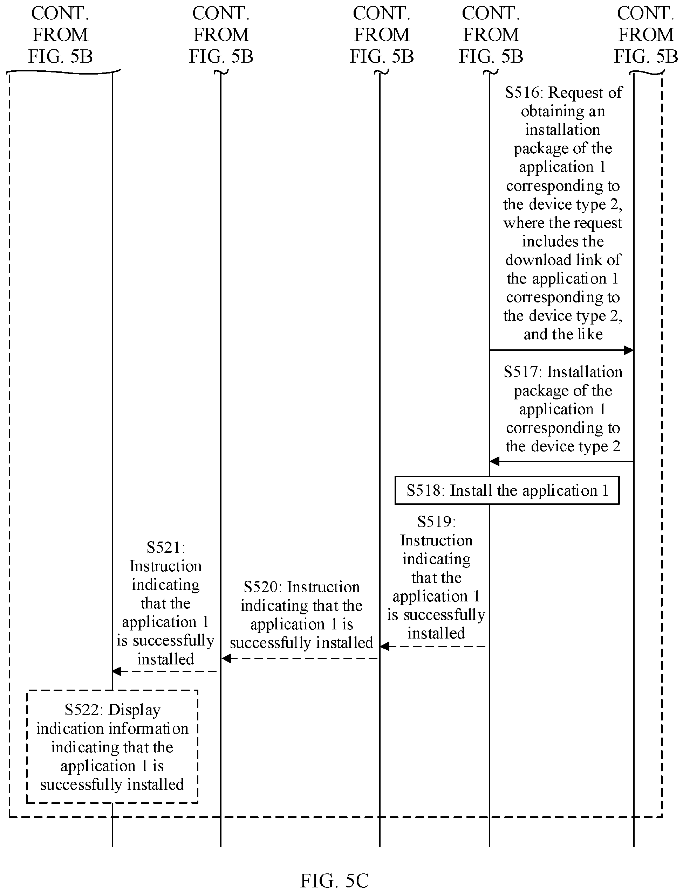

FIG. 5A to FIG. 5C are a schematic flowchart of another application installation method according to an embodiment of this application;

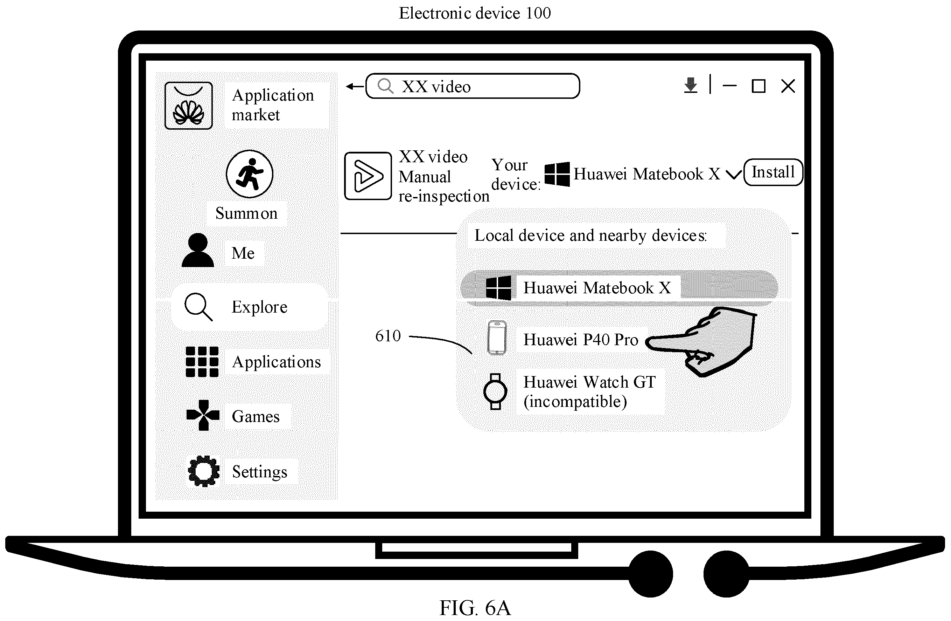

FIG. 6A to FIG. 6F are schematic diagrams of another group of user interfaces according to an embodiment of this application;

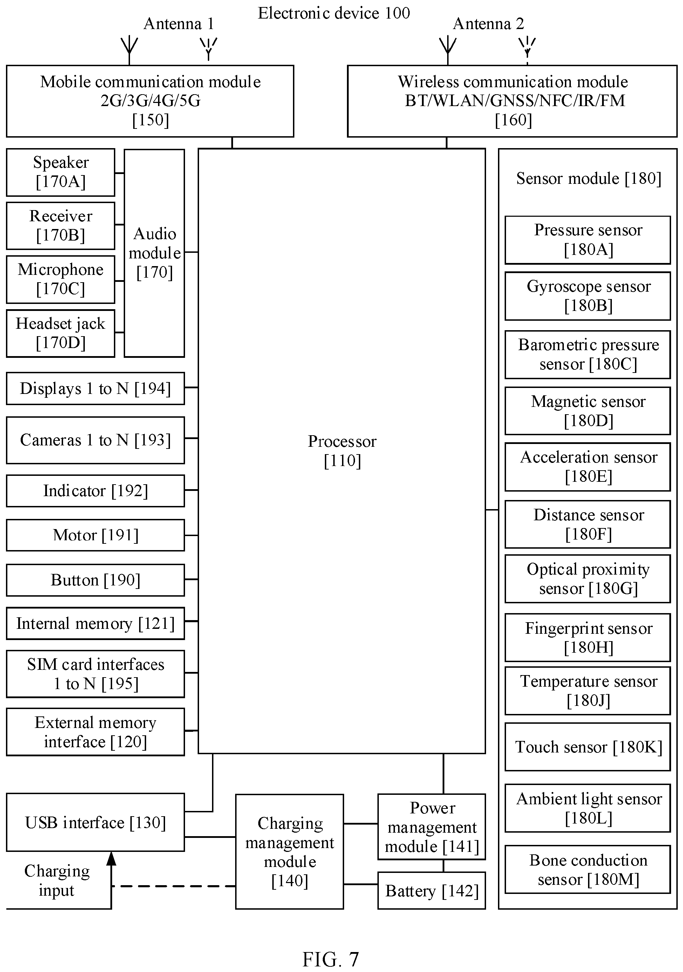

FIG. 7 is a schematic diagram of a structure of an electronic device according to an embodiment of this application;

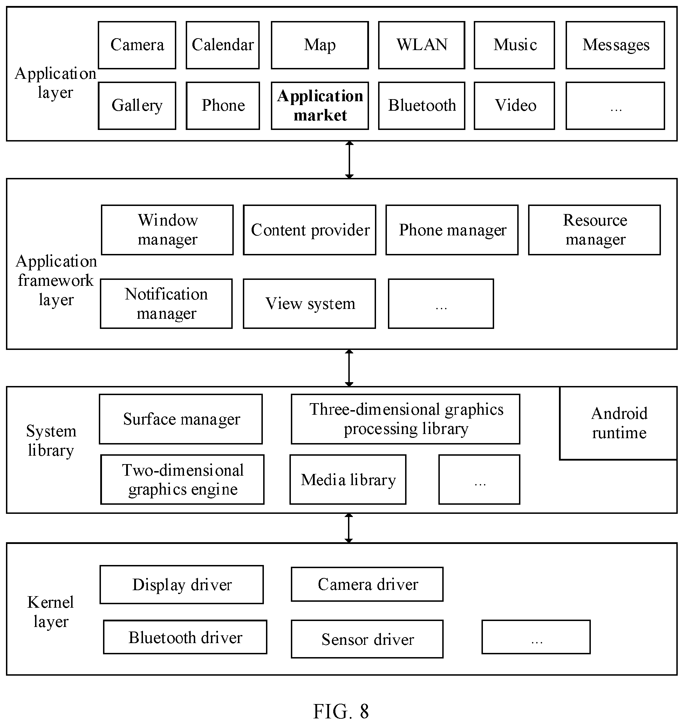

FIG. 8 is a schematic diagram of a software structure of an electronic device according to an embodiment of this application;

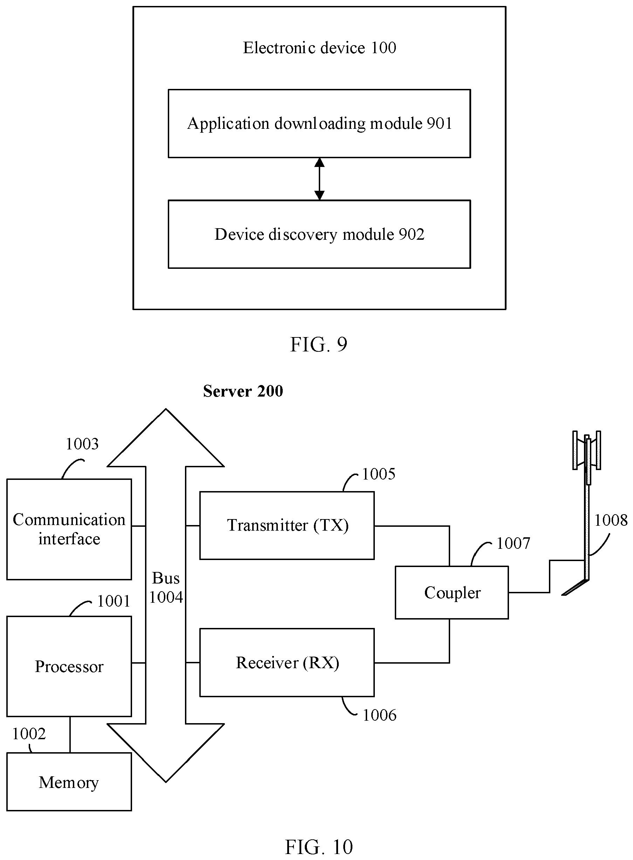

FIG. 9 is a schematic diagram of another structure of an electronic device according to an embodiment of this application; and
FIG. 10 is a schematic diagram of a structure of a server according to an embodiment of this application.

### DESCRIPTION OF EMBODIMENTS

The following clearly and completely describes technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

It should be understood that terms "first", "second", and the like in the specification, claims, and accompanying drawings of this application are intended to distinguish between different objects, but are not intended to describe a specific order. In addition, terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Reference to "an embodiment" in this application means that a specific feature, structure, or characteristic described in combination with the embodiment may be included in at least one embodiment of this application. Phrases appearing at various locations in the specification do not necessarily refer to a same embodiment, and are not independent or alternative embodiments mutually exclusive with other embodiments. A person skilled in the art explicitly and implicitly understands that embodiments described in this application may be combined with other embodiments.

Mobile Internet is an open system. A user may download and install various types of applications for a local device on an electronic device through an application market (or referred to as an application store). However, a general application market can only install different applications for the local device, and cannot perform application installation across devices. For example, currently, when the user searches for an "XX video" application on a mobile phone, an application market server sends, to the mobile phone, an "XX video" Android application package (Android Application Package, APK) file corresponding to a model of the mobile phone. Similarly, when the user searches for the "XX video" application on a personal computer (Personal Computer, PC), the application market server sends, to the PC, an "XX video" executable file (Executable File), namely, an exe file, corresponding to a model of the PC.

In other words, currently, the application market server commonly used in the industry sends an independent application to the local device. For example, for an application market on a mobile phone, the application market server can only send an APK file corresponding to the application to the local device. For an application market on a PC, the application market server can only send an exe file corresponding to the application to the local device. In some actual scenarios, for an application market on a PC, the application market server may also send an APK file corresponding to the application to a PC simulator (for example, a PC simulator with an Android^{®} system).

In this embodiment of this application, sending an application may mean that the application market server sends, to an application market on an electronic device, an installation package and/or a download link of an application (Application, app) that can run on the electronic device. Further, the electronic device may download and install a corresponding application by using the application market.

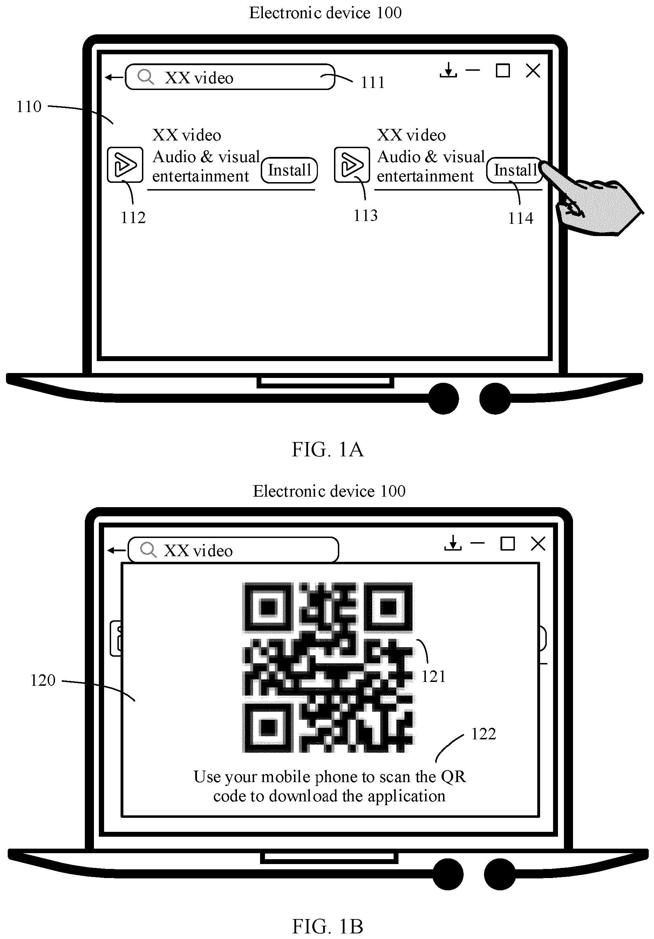

**The following describes a typical application installation scenario with reference to** **FIG. 1A to FIG. 1F****.**

An "XX video" application is used as an example. As shown in FIG. 1A, an electronic device 100 may be a PC. If a user wants to download, on the PC, an APK file corresponding to the "XX video" application, the user may enter "XX video" in a search box 111 on a user interface 110 of an application market on the PC. In this case, two same search results: a search result 112 and a search result 113 (for example, same icons and same names) corresponding to the "XX video" may be displayed on the user interface 110. The two same search results respectively indicate an exe file corresponding to the "XX video" application and the APK file corresponding to the "XX video" application. However, an application corresponding to an exe file and an application corresponding to an APK file of a same content provider (Content Provider, CP) are two independent applications, and the two applications are not associated. For example, an "XX video" application of a mobile phone version is not associated with an "XX video" application of a PC version.

In this way, the two applications that have a same icon and a same name but are not associated are displayed on the user interface 110. This is likely to cause misunderstanding of the user. The user also has doubts when selecting an application to install, and it is difficult for the user to identify an application applicable to installation on a mobile phone and an application applicable to installation on a PC. The application can be successfully installed only when the user makes a correct selection. If the user makes an incorrect selection, the application cannot be successfully installed, and user experience is poor.

Still refer to FIG. 1A. It is assumed that the search result 113 indicates the APK file corresponding to the "XX video" application, that is, the file is applicable to the "XX video" application of the mobile phone version. For example, an electronic device 200 may be a mobile phone. If the user wants to download and install an "XX video" application on the electronic device 200, the electronic device 100 may detect an operation (for example, a click operation) performed by the user on an "Install" option 114. In response to the operation, the electronic device 100 may display a window 120 shown in FIG. 1B as an example.

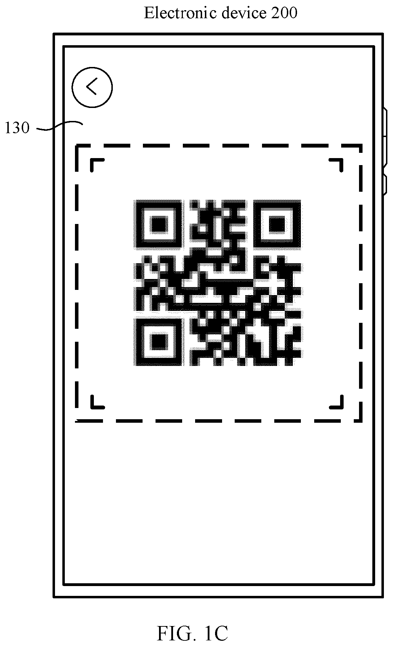

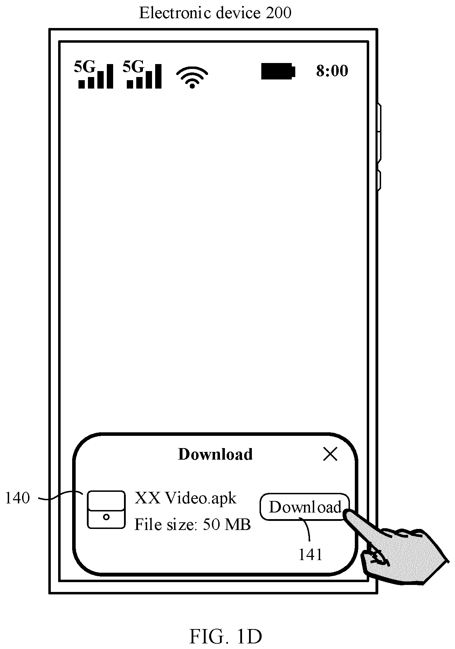

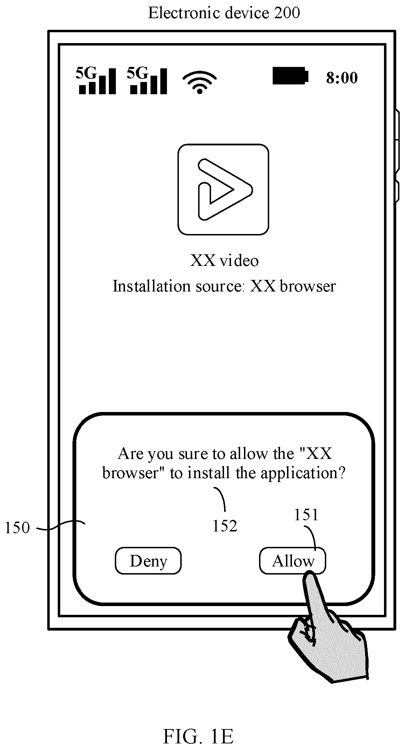

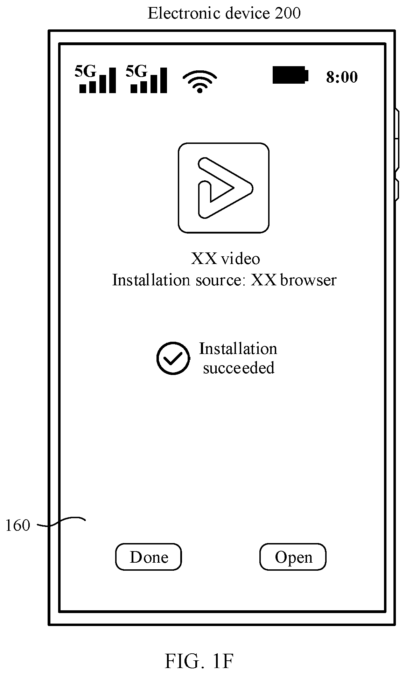

As shown in FIG. 1B, the window 120 may include a QR code 121 and a prompt 122. The prompt 122 prompts the user to download the "XX video" application by scanning the QR code 121 by using the electronic device 200. Further, the electronic device 200 may detect a code-scanning operation of the user, and in response to the operation, the electronic device 200 may display a user interface 130 in a code-scanning scenario shown in FIG. 1C as an example. After the scanning succeeds, the electronic device 200 may display a window 140 shown in FIG. 1D as an example. The window 140 may include an APK file name (for example, XX Video.apk) corresponding to the "XX video" application, a "Download" option 141, and the like. Further, the electronic device 200 may detect an operation (for example, a tap operation) performed by the user on the "Download" option 141, and in response to the operation, the electronic device 200 may download, by using an XX browser, an APK file corresponding to the "XX video" application. After the downloading succeeds, the electronic device 200 may display a window 150 shown in FIG. 1E as an example. The window 150 may include an "Allow" option 151, a prompt 152, and the like. The prompt 152 prompts the user that the APK file corresponding to the "XX video" application is successfully downloaded, and the "XX video" application may be installed by using the XX browser. The electronic device 200 may detect an operation (for example, a tap operation) performed by the user on the "Allow" option 151, and in response to the operation, the electronic device 200 may install the "XX video" application by using the XX browser. After the installation succeeds, the electronic device 200 may display a user interface 160 shown in FIG. 1F as an example. The user interface 160 is used to prompt the user that the "XX video" application is successfully installed.

It can be learned from FIG. 1A to FIG. 1F that, currently, if the user wants to install, on a mobile phone by using an application market of a PC, an application applicable to installation on the mobile phone, the user needs to use the mobile phone to scan a QR code displayed on the PC to download an APK file corresponding to the application to the mobile phone. After the download is completed, an installation procedure is further performed, to send the application to the mobile phone through the PC. In other words, if the user wants to install a same application on a plurality of devices, the user needs to perform a download and installation procedure on each device. This causes cumbersome operations and poor user experience.

Currently, a method for resolving the foregoing problem is as follows: The user may first download and install an application on a local device. If an installation package of the application includes an application installation package corresponding to another electronic device, and when the local device establishes a communication connection (for example, a Bluetooth communication connection) to the another electronic device, the local device may push the application installation package to the another electronic device, to implement cross-device application installation. However, a disadvantage of this method is that the local device needs to first download and install the application, and then the application can be installed across devices. This causes poor user experience.

The application installation method provided in this embodiment of this application can resolve a problem of confusion of the user caused when the user uses an electronic device to search for an application to be installed and a same application applicable to a plurality of electronic devices of different types (such as a PC and a mobile phone) may be found. In addition, cross-device application installation is performed. This can resolve a problem that the user needs to perform a download and installation procedure on each device when the user wants to install a same application on a plurality of devices, thereby simplifying user operations and improving user experience.

The application installation method provided in this embodiment of this application mainly includes the following two solutions.

Solution 1 (far-field solution): A remote communication connection is established based on login of a same account by different electronic devices, to implement cross-device application installation.

Solution 2 (near-field solution): A short-range communication connection is established based on mutual discovery between different nearby electronic devices, to implement cross-device application installation.

The two solutions are described in detail in subsequent embodiments, and details are not described herein.

The following describes a communication system provided in an embodiment of this application.

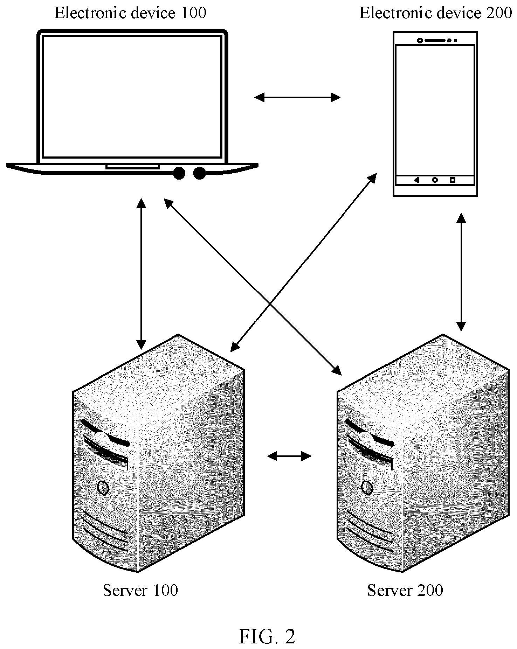

**FIG. 2** **shows an example of a communication system according to an embodiment of this application.**

As shown in FIG. 2, the communication system may include a plurality of electronic devices (for example, an electronic device 100 and an electronic device 200), a server 100, and a server 200.

The plurality of electronic devices included in the communication system are all intelligent electronic devices. A specific type of the electronic device is not limited in this embodiment of this application. For example, the electronic device may include a mobile phone, and may further include a tablet computer, a desktop computer, a laptop computer, a handheld computer, a notebook computer, a smart screen, a wearable device (for example, a smartwatch), an augmented reality (augmented reality, AR) device, a virtual reality (virtual reality, VR) device, an artificial intelligence (artificial intelligence, AI) device, a head unit, a smart headset, a game console, an internet of things (internet of things, IOT) device, a smart home device, and the like. This is not limited. The plurality of electronic devices in the communication system may further include non-portable terminal devices such as a laptop computer (laptop) having a touch-sensitive surface or a touch-control panel, a desktop computer having a touch-sensitive surface or a touch-control panel, or the like.

The server 100 and the server 200 may be conventional servers, or may be cloud servers. This is not limited in this embodiment of this application.

In this embodiment of this application, the server 100 may be an account server configured to be responsible for account login and device management, and may store a device information list of all electronic devices that log in to a same account. The server 200 may be a distribution server (which may be generally referred to as an application market server) configured to be responsible for sending and managing various applications. Data exchange may be performed between the server 100 and the server 200.

In some embodiments, the server 100 and the server 200 may be integrated into one server.

The plurality of electronic devices in the communication system may be connected by logging in to a same account. For example, the plurality of electronic devices may log in to a same Huawei ID, and may be remotely connected and communicate with each other through a server. The account may be a mobile phone number, an email address, a user-defined user name, a user name allocated by an app server, a user name used for login in an app in an electronic device, or the like.

The plurality of electronic devices in the communication system may further establish connections in a manner of scanning a QR code, touching through near field communication (near field communication, NFC), searching for a Bluetooth device, or the like. This is not limited herein.

In general, the communication connections established between the plurality of electronic devices in the communication system may include but are not limited to: a wired connection, a wireless connection like a Bluetooth (Bluetooth, BT) connection, a wireless local area network (wireless local area network, WLAN) connection like a wireless fidelity point-to-point (wireless fidelity point to point, Wi-Fi P2P) connection, a wireless fidelity (wireless fidelity, Wi-Fi) connection, a near field communication (near field communication, NFC) connection, an infrared technology (infrared, IR) connection, a remote connection (for example, a connection established through a server), and the like.

In addition, the plurality of electronic devices in the communication system may also be connected and communicate with each other in any one of the foregoing manners. This is not limited in this embodiment of this application.

Same or different software operating systems (operating systems, OS) may be configured for the plurality of electronic devices in the communication system, including but not limited to Android^{®}, Windows^{®}, Harmony^{®}, and the like. Harmony^{®} is Huawei's HarmonyOS.

In this embodiment of this application, the electronic device 100 may be a PC, a system of the electronic device 100 may be a Windows^{®} operating system, the electronic device 200 may be a mobile phone, and a system of the electronic device 200 may be an Android^{®} operating system.

An embodiment of this application provides an application installation method. The method may be applied to a communication system including a plurality of electronic devices, a server 100, and a server 200.

In the method, each electronic device needs to perform account login by using a same account, and the server 100 may store a device information list of all the electronic devices that log in to the account. For example, the electronic device 100 installs an application on the electronic device 200. The electronic device 100 may obtain, from the server 100, the device information list of all the electronic devices that log in to the account, and display the device information list. Then, the electronic device 100 may detect an operation that a user selects to install an application on the electronic device 200. In response to the operation, the electronic device 100 may send a corresponding instruction to the server 200. After receiving the instruction, the server 200 may send the instruction to the electronic device 200. After receiving the instruction, the electronic device 200 may automatically download, based on the instruction and from the server 200, an installation package file corresponding to the application, and automatically install the application, to implement cross-device application installation.

The following describes in detail the application installation method.

**FIG. 3A-1 to FIG. 3A-3** **show an example of a specific procedure of an application installation method according to an embodiment of this application.**

As shown in FIG. 3A-1 to FIG. 3A-3, the method may be applied to a communication system including an electronic device 100, an electronic device 200, a server 100, and a server 200. The server 100 may be an account server, the server 200 may be a distribution server, the electronic device 100 may be a PC, and the electronic device 200 may be a mobile phone. Both the electronic device 100 and the electronic device 200 may include an application downloading module configured to download and install various applications. For example, the application downloading module of the electronic device 100 may be an application market of a PC, and the application downloading module of the electronic device 200 may be an application market of a mobile phone. The following describes in detail specific steps of the method.

### Phase 1: an account login phase

S301 to S303: The electronic device 100 detects an operation of logging in to an account 1 by a user; in response to the operation, the electronic device 100 sends an account name 1 and device information 1 to the server 100, where the device information 1 includes information like a device name 1 or a device type 1; and the server 100 may store the account name 1 and the device information 1.

Specifically, the electronic device 100 may include an application downloading module, and the application downloading module is configured to download and install various applications. For example, as shown in FIG. 4A, the application downloading module may be an application market installed on the electronic device 100. The electronic device 100 may detect an operation (for example, a click operation) performed by the user on an application market icon 411 displayed on a user interface 410, and in response to the operation, the electronic device 100 may open the application market.

Further, the electronic device 100 may detect an operation of logging in to the account 1 by the user in the application market. In response to the operation, the electronic device 100 may send the account name 1 and the device information 1 to the server 100. The device information 1 may include but is not limited to the information like the device name 1 and the device type 1.

The account name 1 is an account name of the account 1, and the account name may be a user-defined user name, a mobile phone number, an email address, or the like. For example, the account name of the account 1 may be Summon.

The device name 1 is a device name of the electronic device 100. The device name may be a default device name of the device, or may be a device name set by the user. For example, the device name of the electronic device 100 may be Huawei Matebook X.

The device type 1 is a device type of the electronic device 100. For example, if the electronic device 100 is a PC, the device type of the electronic device 100 is a PC.

After receiving the account name 1 and the device information 1 that are sent by the electronic device 100, the server 100 may store the account name 1 and the device information 1.

S304 to S306: The electronic device 200 detects the operation of logging in to the account 1 by the user; in response to the operation, the electronic device 200 sends the account name 1 and device information 2 to the server 100, where the device information 2 includes information like a device name 2 and a device type 2; and the server 100 may store the account name 1 and the device information 2.

Specifically, the electronic device 200 may also include an application downloading module, and the application downloading module is configured to download and install various applications. For example, as shown in FIG. 4B, the application downloading module may be an application market installed on the electronic device 200. The electronic device 100 may detect an operation (for example, a tap operation) performed by the user on an application market icon 421 displayed on a user interface 420, and in response to the operation, the electronic device 200 may open the application market.

Further, the electronic device 200 may detect the operation of logging in to the account 1 by the user in the application market, and in response to the operation, the electronic device 200 may send the account name 1 and the device information 2 to the server 100. The device information 2 may include but is not limited to the information like the device name 2 and the device type 2.

The account name 1 is an account name of the account 1, and the account name may be a user-defined user name, a mobile phone number, an email address, or the like. For example, the account name of the account 1 may be Summon.

The device name 2 is a device name of the electronic device 200. The device name may be a default device name of the device, or may be a device name set by the user. For example, the device name of the electronic device 200 may be Huawei P40 Pro.

The device type 2 is a device type of the electronic device 200. For example, if the electronic device 200 is a mobile phone, the device type of the electronic device 200 is a mobile phone.

After receiving the account name 1 and the device information 2 that are sent by the electronic device 100, the server 100 may store the account name 1 and the device information 2.

It should be noted that a time sequence of performing step S301 to step S303 and performing step S304 to step S306 is not limited in this embodiment of this application. In other words, the electronic device 100 and the electronic device 200 may simultaneously log in to the account 1, or the electronic device 100 may log in to the account 1 before or after the electronic device 200 logs in to the account 1. This is not limited in this embodiment of this application.

Table 1 shows an example of an account name and device information (for example, a device name and a device type) that are stored by the server 100 after both the electronic device 100 and the electronic device 200 log in to the account 1.

It can be learned from Table 1 that there are three electronic devices that log in to an account (namely, the account 1) whose account name is Summon. One is an electronic device (namely, the electronic device 100) whose device name is Huawei Matebook X and whose device type is a PC, another electronic device is an electronic device (namely, the electronic device 200) whose device name is Huawei P40 Pro and whose device type is a mobile phone, and another electronic device is an electronic device whose device name is Huawei Watch GT and whose device type is a watch.

**Table 1**

| Account names | Device names | Device types |
|---|---|---|
| Summon | Huawei Matebook X | Personal computer (PC) |
| Summon | Huawei P40 Pro | Mobile phone (phone) |
| Summon | Huawei Watch GT | Watch (Watch) |

The server 100 may store device information of all the electronic devices that log in to the account 1. Table 1 shows only device information of the electronic device 100, the electronic device 200, and the watch that log in to the account 1. It is easy to understand that the server 100 may further store device information of more devices that log in to the account 1.

It should be noted that, after detecting an account login operation of the user, the electronic device may send both account information and device information to the account server, and the account server may store both the account information and the device information. The account information is not limited to the foregoing account name, and the device information is not limited to the foregoing device name and device type, and may further include information like a device ID, a serial number, a media access control address, and a device model. This is not limited in this embodiment of this application.

It should be noted that the account login operation of the user in step S301 and step S304 may be an operation in which the user enters information like an account name and an account password when logging in to the application market for the first time; or may be an operation in which the user opens the application market after logging in to a system account, and the application market logs in to the system account by default; or may be an operation in which the user logs in to the application market for the first time, exits the application market, opens the application market, and logs in to an account again.

### Phase 2: a phase of obtaining and displaying application information and device information

S307 to S309: The electronic device 100 detects an operation of searching for an application 1 by the user; in response to the operation, the electronic device 100 sends, to the server 200, a request for obtaining related information of the application 1, where the request may carry information like an application name of the application 1; and after receiving the request, the server 200 sends the related information of the application 1 to the electronic device 100, where the related information includes a device type applicable to the application 1, and names of application installation packages, download links, and the like that are of the application 1 corresponding to different device types.

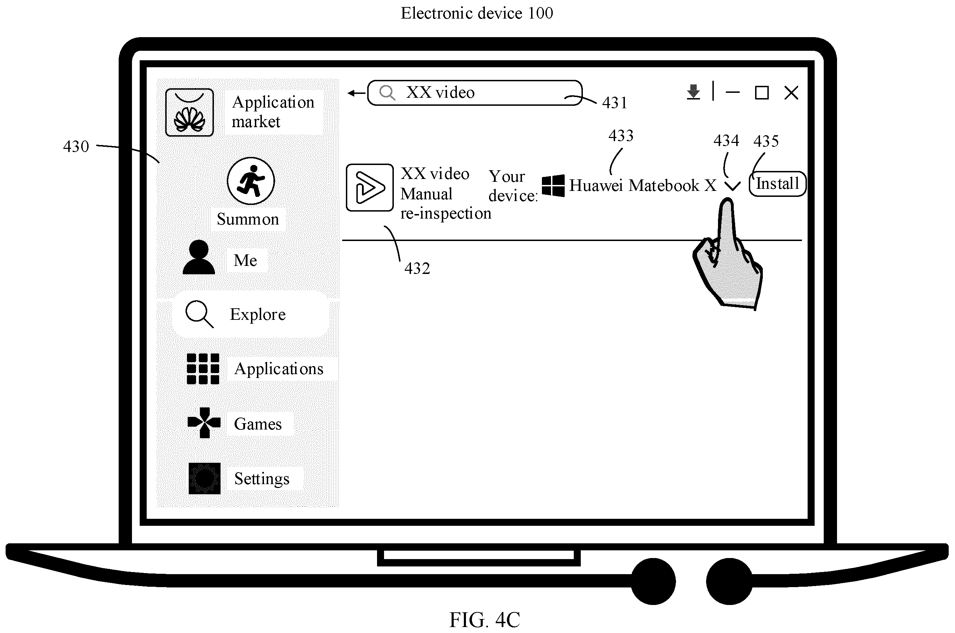

Specifically, as shown in FIG. 4C, a user interface 430 is an example of a user interface that has a search function in an application market of the electronic device 100. For example, the application 1 is an "XX video" application. After the account login phase is completed, the electronic device 100 may detect an operation of searching for "XX video" in a search box 431 by the user (for example, the user enters a keyword "XX video"). In response to the operation, the electronic device 100 may send a request for obtaining related information of the "XX video" application to the server 200. The request may carry information like an application name of the "XX video" application. After receiving the request, the server 200 may send the related information of the "XX video" application to the electronic device 100. The related information may include but is not limited to a device type applicable to the "XX video" application, and names of application installation packages, download links, and the like of the "XX video" application corresponding to different device types. For example, the related information further includes an application name.

In some embodiments, the related information may not include a download link. After detecting an operation in which the user determines to download the application 1 (for example, an operation of selecting Huawei P40 Pro by the user in FIG. 6A), the electronic device 100 may send a request to the server 200. The request indicates the server 200 to send a download link of the application 1 to the electronic device 100.

Table 2 shows an example of the related information of the "XX video" application sent by the server 200 to the electronic device 100.

It can be learned from Table 2 that an application name is "XX video", and the "XX video" application is applicable to two types of devices: a PC and a mobile phone. A name of an application installation package corresponding to the XX video application whose device type is a PC is XXTV, and a download link is http://AAAAAA. A name of an application installation package corresponding to the XX video application whose device type is a mobile phone is com.xxtv.quickapp, and a download link is http://BBBBBB.

**Table 2**

| Application names | Names of application installation packages | Device types | Download links |
|---|---|---|---|
| XX video | XXTV | Personal computer (PC) | http://AAAAAA |
| XX video | com.xxtv.quickapp | Mobile phone (phone) | http://BBBBBB |

S310 and S311: The electronic device 100 sends, to the server 100, a request for obtaining device information of a device that has logged in to the account 1, and after receiving the request, the server 100 sends, to the electronic device 100, the device information of the device that has logged in to the account 1.

Specifically, after obtaining the related information of the application 1, the electronic device 100 may send, to the server 100, the request for obtaining device information of a device that has logged in to the account 1 (for example, the account whose account name is Summon). The request may carry information like an account name of the account 1. Because the server 100 has stored, in advance, device information of all electronic devices that log in to the account 1, after receiving the request, the server 100 may send, to the electronic device 100, the device information of the device that has logged in to the account 1. The device information may be the device information that is of the device logging in to the account 1 and that is already stored by the server 100 in the Table 1, for example, the device name and the device type of the electronic device 100, and the device name and the device type of the electronic device 200.

It should be noted that a time sequence of performing step S308 and step S309 and performing step S310 and step S311 is not limited in this embodiment of this application. In some embodiments, step S310 and step S311 may be performed first, and then step S308 and step S309 are performed. In some other embodiments, step S308 and step S309, and step S310 and step S311 may be simultaneously performed.

In some embodiments, the electronic device 100 may first perform step S310 and step S311. To be specific, the electronic device 100 obtains device information of devices that log in to a same account. Then, an execution process of step S308 and step S309 may be the following process: The electronic device 100 sends a request to the server 200 based on the obtained device information, where the request includes the obtained device information and the like, and the request indicates the server 200 to send, to the electronic device 100, a name of an application installation package, a download link, and the like that correspond to the device information. After receiving the request, the server 200 may send, to the electronic device 100, the name of the application installation package, the download link, and the like that correspond to the device information.

S312: The electronic device 100 displays a search result of the application 1 and a device information list of the device that has logged in to the account 1.

Specifically, after the electronic device 100 completes step S307 to step S311, to be specific, after the electronic device 100 obtains the related information of the application 1 and the device information of the device that has logged in to the account 1, the electronic device 100 may display the search result of the application 1, for example, a search result 432 of the "XX video" application shown in FIG. 4C.

The electronic device 100 may further display an "Install" option 435, and the "Install" option 435 may be used to install the "XX video" application on the local device or another device.

Optionally, the electronic device 100 may further display a device name 433 and a drop-down option 434 of the local device.

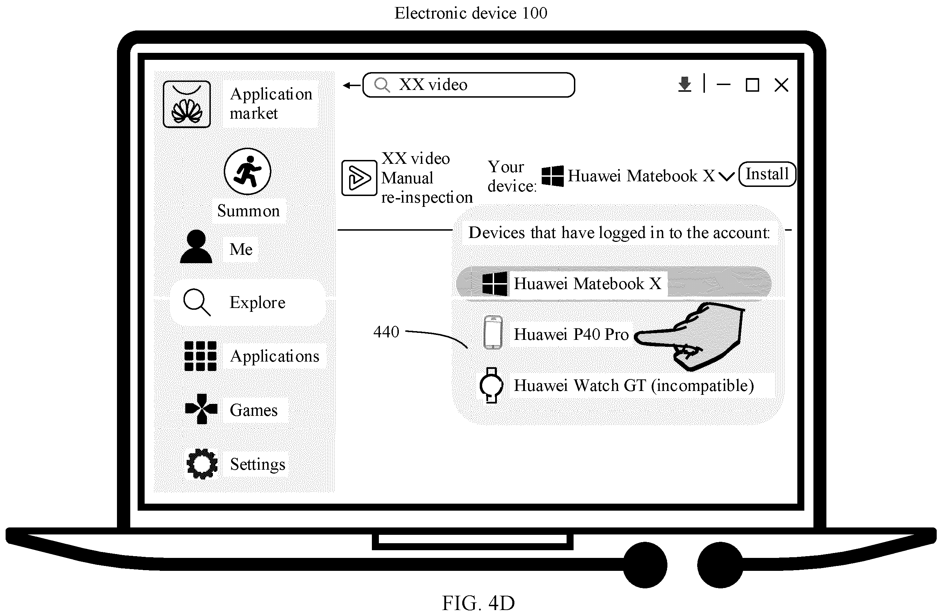

The electronic device 100 may detect an operation (for example, a click operation) performed by the user on the drop-down option 434. In response to the operation, the electronic device 100 may display a window 440 shown in FIG. 4D as an example. The window 440 may include a device information list of a device that has logged in to the account 1.

Optionally, the window 440 may include only a device name of a device that has logged into the account 1, for example, a device name Huawei Matebook X of the electronic device 100 or a device name Huawei P40 Pro of the electronic device 200.

In some embodiments, as shown in FIG. 4D, devices displayed in the device information list may include all devices that log in to the account 1. The devices include devices (for example, Huawei Matebook X and Huawei P40 Pro) that are applicable to the application 1 and a device (for example, Huawei Watch GT) that is not applicable to the application 1. For example, as shown in FIG. 4D, prompt information "incompatible" may be displayed next to device information of the device that is not applicable to the application 1. In some other embodiments, devices displayed in the device information list may include only a device that is logged in to the account 1 and that is applicable to the application 1, and do not include a device that is not applicable to the application 1. In some other embodiments, the device information list may include only another device that logs in to the same account as the electronic device 100, and does not include the electronic device 100.

In some embodiments, another implementation of step S307 to step S312 in the phase 2 may also be step S307' to step S313' shown in FIG. 3B-1 and FIG. 3B-2 as an example. The following provides detailed descriptions.

S307': The electronic device 100 detects an operation of searching for the application 1 by the user.

S308': The electronic device 100 sends, to the server 200, a request for obtaining related information 1 of the application 1.

For a specific execution process of step S307' and step S308', refer to related content in step S307 to step S308 in the embodiment shown in FIG. 3A-1 to FIG. 3A-3. Details are not described herein again.

S309': The server 200 sends the related information 1 of the application 1 to the server 100, where the related information 1 may include a device type applicable to the application 1, and names of application installation packages, download links, and the like that are of the application 1 corresponding to different device types.

The related information 1 of the application 1 is the related information of the application 1 in the foregoing step S309 (for example, the related information of the "XX video" application shown in Table 2)

S310': The electronic device 100 sends, to the server 100, a request for obtaining device information of a device that has logged in to the account 1.

For a specific execution process of step S310', refer to related content in step S310 in the embodiment shown in FIG. 3A-1 to FIG. 3A-3. Details are not described herein again.

S311': The server 100 determines related information 2 of the application 1 based on the device type applicable to the application 1 and a device type of the device that has logged in to the account 1, where the related information 2 may include a device type of the device that is applicable to the application 1 and that has logged in to the account 1, an installation package name of the application 1, a download link of the application 1, and the like. Different device types correspond to different versions of the application 1, and different versions of the application 1 correspond to different installation package names of the application 1 and different download links of the application 1.

Specifically, because the server 100 has stored, in advance, device information of all electronic devices that log in to the account 1, and the device information may include information like device names and device types of all the electronic devices, the server 100 may determine, based on a received device type that is applicable to the application 1 and that is sent by the server 200, the device type of a device that is applicable to the application 1 and that has logged in to the account 1.

For example, if device types applicable to the application 1 are a PC, a mobile phone, and a watch, and device types of devices that have logged in to the account 1 are a PC and a mobile phone, device types of devices that are applicable to the application 1 and have logged in to the account 1 are a PC and a mobile phone. For another example, if device types applicable to the application 1 are a PC and a mobile phone, and device types of devices that have logged in to the account 1 are a PC, a mobile phone, and a watch, device types of devices that are applicable to the application 1 and have logged in to the account 1 are a PC and a mobile phone. For another example, if device types applicable to the application 1 are a PC, a mobile phone, and a watch, and device types of devices that have logged in to the account 1 are a PC, a mobile phone, and a watch, device types of devices that are applicable to the application 1 and have logged in to the account 1 are a PC, a mobile phone, and a watch.

Further, the server 100 may further determine the installation package name of the application 1, the download link of the application 1, and the like based on the received names of application installation packages, download links, and the like that are sent by the server 200 and that are of the application 1 corresponding to different device types. The installation package name of the application 1 is a name of an application installation package of the application 1 corresponding to a device type of a device that is applicable to the application 1 and has logged in to the account 1, and the download link of the application 1 is a download link of the application 1 corresponding to the device type of the device that is applicable to the application 1 and that has logged in to the account 1, and the like.

So far, the server 100 determines the related information 2 of the application 1. The related information 2 may include but is not limited to the device type of the device that is applicable to the application 1 and that has logged in to the account 1, the installation package name of the application 1, the download link of the application 1, and the like.

S312': The server 100 sends, to the electronic device 100, the related information 2 of the application 1 and device information of the device that is applicable to the application 1 and that has logged in to the account 1.

S313': The electronic device 100 displays a search result of the application 1 and a device information list of the device that is applicable to the application 1 and that has logged in to the account 1.

In some embodiments, the server 100 may alternatively send, to the electronic device 100, device information of all devices that have logged in to the account 1. These devices may include devices that are not applicable to the application 1. For example, it is assumed that the application 1 is not applicable to a smartwatch, but a device that has logged in to the account 1 includes the smartwatch. In this case, the server 100 may also send device information of the smartwatch to the electronic device 100. In this case, a device information list may also display the device information of the smartwatch, and may further display prompt information (for example, the prompt information "incompatible" shown in the window 440 in FIG. 4D), to prompt the user that the application 1 is not applicable to the smartwatch.

### Phase 3: an application download and installation phase

S313 and S314: The electronic device 100 detects an operation that the user selects to install the application 1 on a device corresponding to the device name 2, and in response to the operation, the electronic device 100 determines, based on the device selected by the user, that a device type of the device is the device type 2, and further determines a download link of the application 1 corresponding to the device type 2.

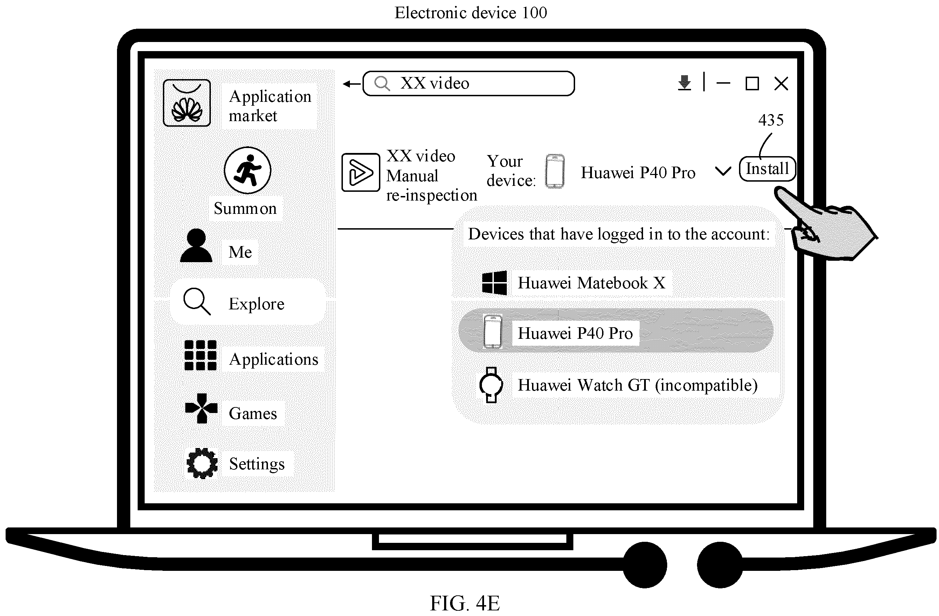

Specifically, an example in which the electronic device 100 installs the "XX video" application on the electronic device 200 is used. A device name of the electronic device 200 is a device name 2, the device name 2 is Huawei P40 Pro, and the application 1 is the "XX video" application. As shown in FIG. 4D, the electronic device 100 may detect the operation that the user selects to install the "XX video" application on the device corresponding to the device name 2 (for example, an operation of clicking, by the user, a Huawei P40 Pro option shown in FIG. 4D and an operation of clicking, by the user, an "Install" option 435 shown in FIG. 4E). In response to the operation, the electronic device 100 sets the Huawei P40 Pro option to a selected state shown in FIG. 4E, that is, the device selected by the user is the Huawei P40 Pro. In addition, because the electronic device 100 obtains, in advance, the device information of the device that has logged in to the account 1 (refer to Table 1), the electronic device 100 may determine, based on the device selected by the user, that the device type of the device is the device type 2 (namely, a mobile phone). Further, because the electronic device 100 obtains, in advance, the related information of the "XX video" application (refer to Table 2), the electronic device 100 may determine that the download link of the "XX video" application corresponding to the device type 2 is http://BBBBBB.

In a possible implementation, the detected operation that the user selects to install the "XX video" application on the device corresponding to the device name 2 may also be only the operation of clicking, by the user, the Huawei P40 Pro option shown in FIG. 4D. In other words, after selecting the device option for installing the "XX video" application, the user does not need to click the "Install" option, and the electronic device 100 can perform subsequent steps.

Optionally, the electronic device 100 may also determine, based on the device type 2, a name of an application installation package of the application 1 corresponding to the device type 2.

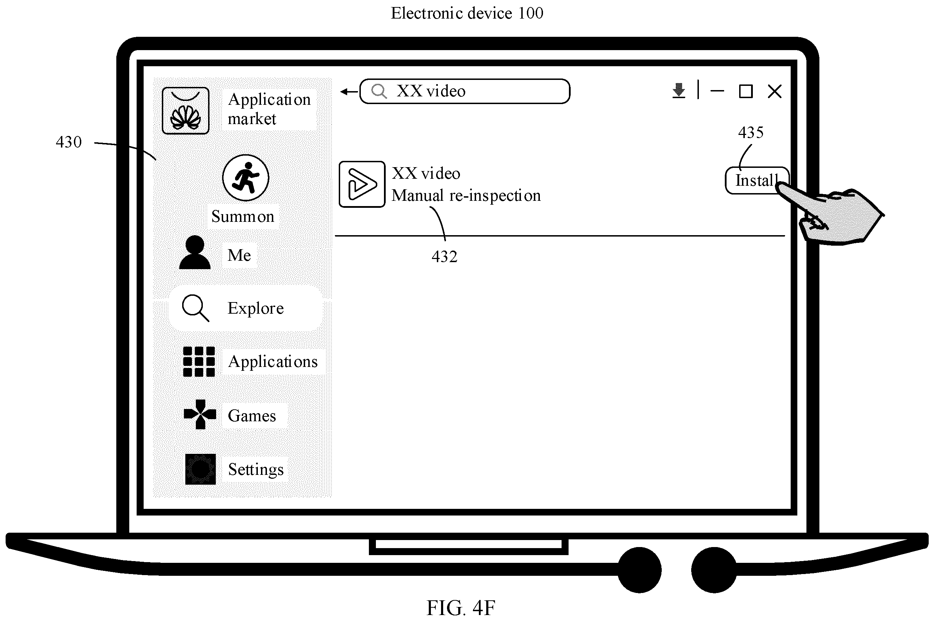

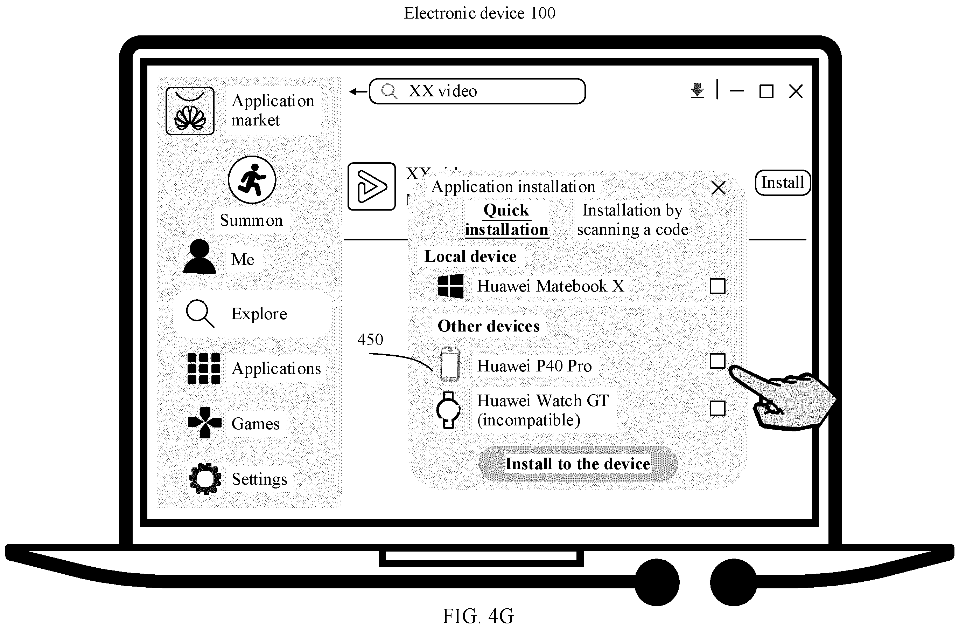

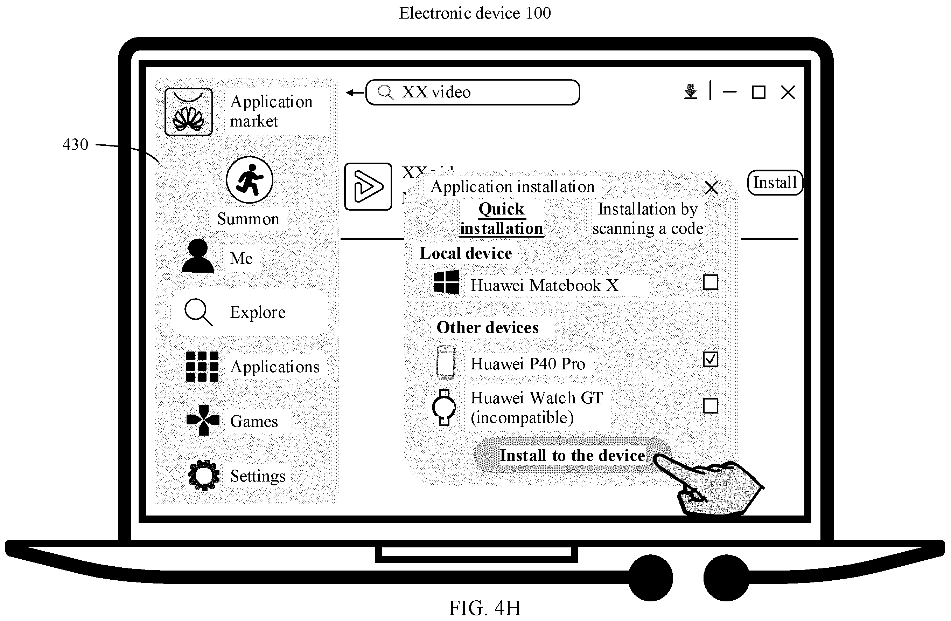

In a possible implementation, as shown in FIG. 4F to FIG. 4H, after the user searches for the "XX video" application, interface display and user operations may be different from those in FIG. 4C to FIG. 4E. As shown in FIG. 4F, different from FIG. 4C, the electronic device 100 may display only the search result 432 and the "Install" option 435 of the "XX video" application. Further, the electronic device 100 may detect an operation (for example, a click operation) performed by the user on the "Install" option 435, and in response to the operation, the electronic device 100 may display a window 450 shown in FIG. 4G as an example. As shown in FIG. 4G and FIG. 4H, different from FIG. 4D and FIG. 4E, the foregoing operation that the user selects to install the "XX video" application on the device corresponding to the device name 2 may include an operation of clicking, by the user, a Huawei P40 Pro option shown in FIG. 4G and an operation of clicking, by the user, an option of installing to a device shown in FIG. 4H.

As shown in FIG. 4G and FIG. 4H, the user may select only one device (for example, Huawei P40 Pro) at a time to install the "XX video" application, or may select a plurality of devices (for example, Huawei Matebook X and Huawei P40 Pro) at a time to simultaneously install the "XX video" application, to improve installation efficiency.

It can be learned from FIG. 4C or FIG. 4F that, a difference from FIG. 1A lies in that, after the user searches for the "XX video" application, only one search result, instead of a plurality of search results shown in FIG. 1A, of the "XX video" application is displayed in FIG. 4C or FIG. 4F. In other words, when this solution is implemented, only one search result of the "XX video" application is displayed on an interface (namely, a foreground), and the user does not need to distinguish a device type applicable to an installation package of the "XX video" application. This can resolve a problem of confusion of the user caused when the user uses an electronic device to search for an application to be installed and a same application applicable to a plurality of electronic devices of different device types (such as a PC and a mobile phone) may be found.

S315 to S317: The electronic device 100 sends a download instruction 1 to the server 200, where the instruction includes the device information 2, the download link of the application 1 corresponding to the device type 2, and the like. After receiving the download instruction 1, the server 200 sends the download instruction 1 to the electronic device 200. Optionally, after receiving the download instruction 1, the electronic device 200 may display prompt information to prompt the user to install the application 1, and may detect an operation that the user agrees to install the application 1.

Specifically, the electronic device 100 may send the download instruction 1 to the server 200, where the instruction may include but is not limited to device information of the electronic device 200 (namely, the device information 2), the download link of the application 1 corresponding to the device type 2 (for example, the download link http://BBBBBB of the "XX video" application corresponding to the device type 2), and the like.

The device information 2 may include information like a device name, a device ID, and a media access control address of the electronic device 200, so that the server 200 can find the electronic device 200. Only after the server 200 finds the electronic device 200, the server 200 can communicate with the electronic device 200.

Optionally, the download instruction 1 may further include a name of an application installation package of the application 1 corresponding to the device type 2.

In this embodiment of this application, the download instruction 1 may further include account information of the electronic device 100 and device information of the electronic device 100.

After receiving the download instruction 1, the server 200 may send the download instruction 1 to the electronic device 200.

In a possible implementation, after receiving the download instruction, the server 200 may first obtain, from the server 100 based on the account information of the electronic device 100, a device information list of all devices that log in to a same account as the electronic device 100, and then find, in the device information list based on the information like a device name, a device ID, and a media access control address of the electronic device 200, that a device corresponding to the device information 2 is the electronic device 200. In this way, the server 200 may determine that the download instruction 1 needs to be sent to the electronic device 200. Further, the server 200 may send the download instruction 1 to the electronic device 200.

Optionally, the server 200 may send only the download link of the application 1 corresponding to the device type 2 and the device name of the electronic device 200 to the electronic device 200.

Optionally, the server 200 may send, to the electronic device 200, only the name of the application installation package of the application 1 corresponding to the device type 2 and the device name of the electronic device 200.

In this way, the electronic device 100 may perform a remote communication connection to the electronic device 200 through the server 200, and indicate, by using the server 200, the electronic device 200 to download and install the application 1.

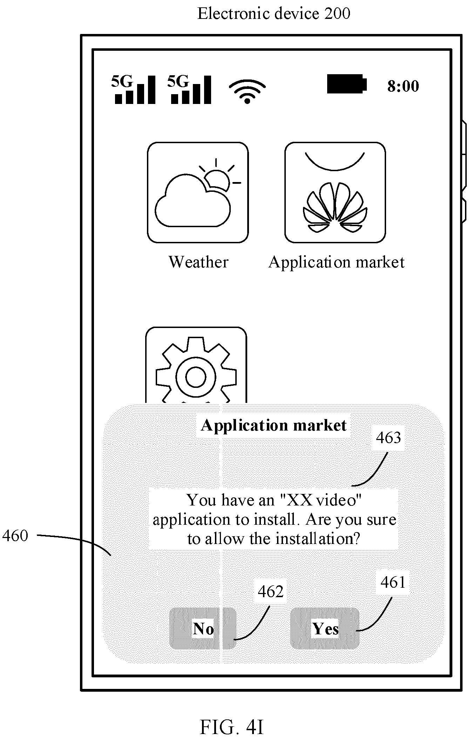

In some embodiments, after receiving the download instruction 1 sent by the server 200, the electronic device 200 may display a window 460 shown in FIG. 4I as an example. The window 460 may include an option 461, an option 462, and prompt information 463, to prompt the user to download and install the application 1. In this way, the user may be given a selection right, and security may also be improved. The electronic device 200 may detect an operation that the user agrees to download and install the application 1 (for example, a tap operation on the option 461), and in response to the operation, the electronic device 200 may perform subsequent steps. A display form of the window 460 may be a push notification, a pop-up window displayed on a user interface (for example, a leftmost screen, a lock screen, or a home screen), or the like. This is not limited in this embodiment of this application.

In a possible implementation, after the electronic device 100 sends, to the server 200, a request for obtaining related information of the application 1, the server 200 does not need to send, to the electronic device 100, names of application installation packages, download links, and the like that are of the application 1 corresponding to all device types, but may first send, to the electronic device 100, a name of the application 1, a name of an application installation package, a download link, and the like that are of the application 1 applicable to a device type of the electronic device 100. The electronic device 100 may display, based on obtained device information, the window 440, namely, a drop-down menu, shown in FIG. 4D. After detecting an operation that the user selects, from the drop-down menu, to install the application 1 on the electronic device 200, the electronic device 100 may send device information of the electronic device 200, the name of the application 1, the account information of the electronic device 100, and the like to the server 200, and the server 200 determines, based on the device information of the electronic device 200 and the name of the application 1, a name of an application installation package, a download link, and the like that are of the application 1 applicable to a device type of the electronic device 200, and determines, based on the device information of the electronic device 200 and the account information of the electronic device 100, that the name of the application installation package, the download link, and the like that are of the application 1 applicable to the device type of the electronic device 200 needs to be sent to the electronic device 200. Further, the server 200 may send, to the electronic device 200, the name of the application installation package, the download link, and the like that are of the application 1 applicable to the device type of the electronic device 200, to trigger the electronic device 200 to download and install the application 1. If the server 200 does not match, based on the device information of the electronic device 200 and the name of the application 1, the application 1 applicable to the device type of the electronic device 200, the server 200 may send prompt information to the electronic device 100. The prompt information prompts the user that there is no installation package or download link of the application 1 corresponding to the device type of the electronic device 200.

S318 to S320: The electronic device 200 sends, to the server 200, a request for obtaining an installation package of the application 1 corresponding to the device type 2, where the request includes the download link of the application 1 corresponding to the device type 2. After receiving the request, the server 200 sends, to the electronic device 200, the installation package of the application 1 corresponding to the device type 2. After receiving the installation package, the electronic device 200 installs the application 1.

For example, in a case in which the download instruction 1 received by the electronic device 200 includes the download link of the application 1 corresponding to the device type 2, the request may carry the download link of the application 1 corresponding to the device type 2, and the electronic device 200 may automatically route, based on the download link that is of the application 1 corresponding to the device type 2 and that is sent by the server 200, to the server 200 to download the installation package of the application 1 corresponding to the device type 2. After the downloading is completed, the electronic device 200 may install the application 1. An installation process is the same as that in the conventional technology, and details are not described herein again.

For example, in a case in which the download instruction 1 received by the electronic device 200 includes the name of the application installation package of the application 1 corresponding to the device type 2, the request may carry the name of the application installation package of the application 1 corresponding to the device type 2. After receiving the request, the server 200 sends, to the electronic device 200, the installation package of the application 1 corresponding to the device type 2. After receiving the installation package, the electronic device 200 may install the application 1. An installation process is the same as that in the conventional technology, and details are not described herein again.

S321 to S323: The electronic device 200 sends, to the server 200, an instruction indicating that the application 1 is successfully installed; the server 200 sends the instruction to the electronic device 100 after receiving the instruction; and after receiving the instruction, the electronic device 100 displays indication information indicating that the application 1 is successfully installed.

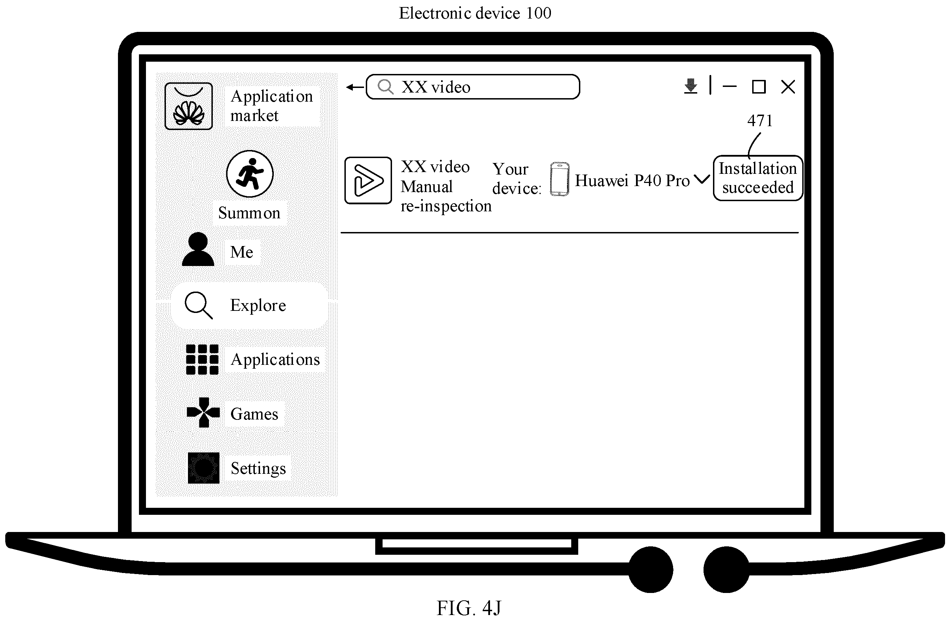

Specifically, after successfully installing the application 1, the electronic device 200 may send, to the server 200, the instruction indicating that the application 1 is successfully installed. The instruction may include device information of the electronic device 100. The device information may be carried when the server 200 sends the download instruction 1 to the electronic device 100. After receiving the instruction, the server 200 may send the instruction to the electronic device 100, to notify the electronic device 100 that the electronic device 200 has successfully installed the application 1. After receiving the instruction, the electronic device 100 may display indication information 471 that indicates that the application 1 is successfully installed and that is shown in FIG. 4J as an example. The indication information indicates that the electronic device 200 has successfully installed the application 1. That is, the electronic device 100 successfully installs the application 1 on the electronic device 200, to implement cross-device application installation.

In some embodiments, the installation success instruction may alternatively be an installation success message.

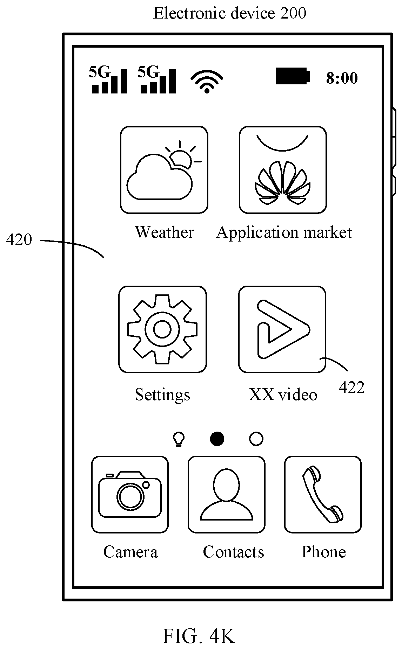

For example, the application 1 is the "XX video" application. As shown in FIG. 4K, compared with FIG. 4B, the electronic device 200 displays an icon 422 of a new "XX video" application on the user interface 420, to indicate that the electronic device 200 successfully installs the "XX video" application.

It should be noted that step S321 to step S323 are optional. In some embodiments, step S321 to step S323 may not be performed. That is, after successfully installing the application 1, the electronic device 200 may not notify the electronic device 100, and the electronic device 100 does not need to display the indication information indicating that the application 1 is successfully installed.

Refer to FIG. 4H. It may be understood that, in FIG. 4H, device information of more other electronic devices that establish a connection to the electronic device 100 may be further displayed, for example, an electronic device 300 (not shown in the figure). The user may select a plurality of devices at a time to simultaneously install the "XX video" application. For example, the user may simultaneously select the electronic device 200 and the electronic device 300. It is easy to understand that a process of installing the "XX video" application by the electronic device 300 is similar to a process of installing the "XX video" application by the electronic device 200, and details are not described herein again.

According to the application installation method provided in the foregoing embodiment, a plurality of electronic devices (for example, a local device and one or more peer devices) that are not associated may be associated by logging in to a same account, to implement a function of remotely installing an application across devices. A local device (for example, the electronic device 100) does not need to provide, in a foreground, a plurality of names of applications that are applicable to different device types for a user to select. In this way, a problem that the user is confused by a plurality of applications with a same name can be well resolved. In addition, a local device and a peer device (for example, the electronic device 200) are associated by logging in to a same account. The local device may provide, for the peer device, a download link of an application corresponding to a device type of the peer device, and the peer device may download an installation package file of the corresponding application based on the download link, so that cross-device application installation can be implemented. In this way, the peer device can automatically install an application without performing a download and installation operation repeatedly by a user, thereby simplifying user operations and improving user experience.

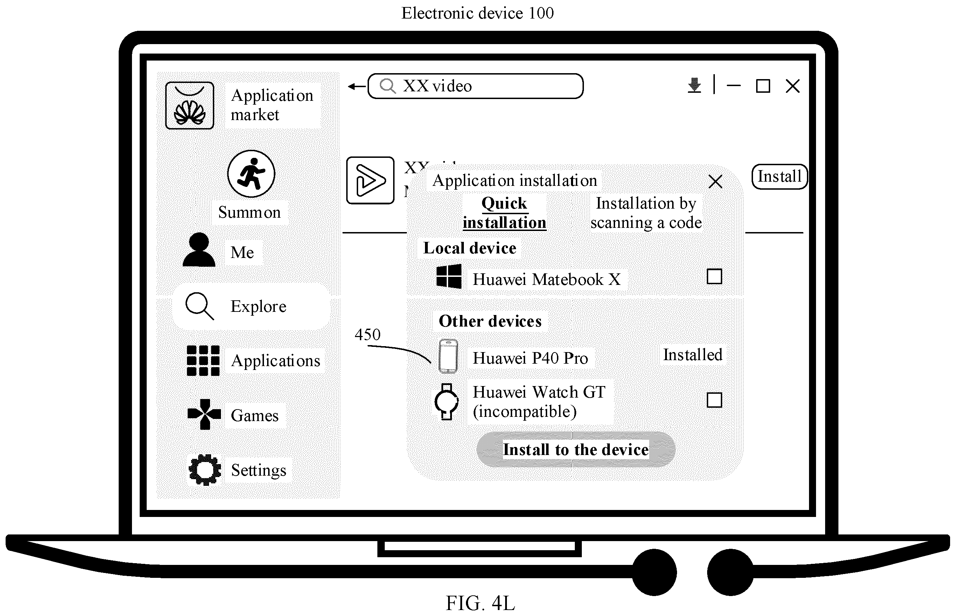

Still refer to FIG. 3B-1 and FIG. 3B-2. In some embodiments, and in step S309', the related information 1 of the application 1 may further include device information (for example, a device name and a device ID) and indication information (for example, "installed") of an electronic device on which the application 1 is installed. The device information is recorded by the server 200 after the electronic device installs the application 1. The related information 1 of the application 1 may further include device information (for example, a device name and a device ID) and indication information (for example, "not installed") of an electronic device on which the application 1 is not installed. After receiving the device information of the electronic device on which the application 1 is installed/not installed, the server 100 may compare the device information with stored device information of a device logging in to the account 1, to determine device information of a device that logs in to the account 1 and on which the application 1 is installed/not installed. Further, in step S311', the related information 2 of the application 1 may further include device information and indication information of the device that logs in to the account 1 and on which the application 1 is installed/not installed. Further, in step S313', as shown in FIG. 4L as an example, if a device that logs in to the account 1 and on which the application 1 is installed is the electronic device 200, namely, Huawei P40 Pro, prompt information "Installed" may be displayed next to the Huawei P40 Pro in a device information list shown in FIG. 4L, to prompt the user that the application 1 has been installed on the Huawei P40 Pro.

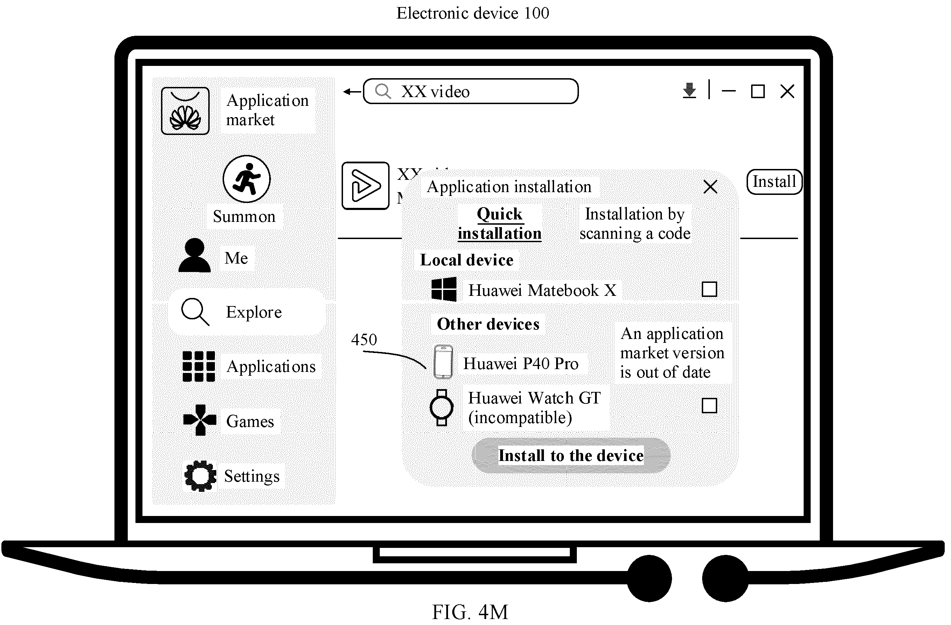

Still refer to FIG. 3B-1 and FIG. 3B-2. In some embodiments, and in step S309', the related information 1 of the application 1 may further include an application market version applicable to installation of the application 1. After receiving the application market version applicable to the installation of the application 1, the server 100 may send a request for obtaining an application market version to all electronic devices that log in to the account 1. Further, the server 100 may receive application market versions of all the electronic devices that log in to the account 1. Further, the server 100 may compare the application market version applicable to the installation of the application 1 with the application market versions of all the electronic devices that log in to the account 1, to determine device information of a device whose application market version is out of date (namely, device information of a device corresponding to an application market version that is not applicable to the installation of the application 1). Further, in step S311', the information 2 related to the application 1 may further include the device information of a device whose application market version is out of date. Further, in step S313', as shown in FIG. 4M as an example, if a device whose application market version is out of date is the electronic device 200, namely, Huawei P40 Pro, prompt information "An application market version is out of date" may be displayed in a device information list shown in FIG. 4M, to prompt the user that the application market version on the Huawei P40 Pro is out of date and is not applicable to the installation of the application 1.

In some embodiments, the server 100 does not need to send a request for obtaining an application market version to all electronic devices that log in to the account 1. Instead, the electronic device may send an application market version of the electronic device to the server 100 after logging in to an account, and the server 100 may store the application market version of the electronic device.

An embodiment of this application provides another application installation method. The method may be applied to a communication system including a plurality of electronic devices and a server 200.

In the method, the plurality of electronic devices are all nearby electronic devices (namely, near-end devices). The plurality of electronic devices may discover each other based on technologies such as Wi-Fi, Bluetooth, and NFC. A mutual communication path, namely, a short-range communication connection, may be established between two electronic devices that discover each other. Further, the two electronic devices that discover each other may obtain device information of each other. For example, the electronic device 100 installs an application on the electronic device 200. The electronic device 100 may display a device information list of a nearby device obtained by the electronic device 100. The electronic device 100 may detect an operation that a user selects to install an application on the electronic device 200. In response to the operation, the electronic device 100 may send a corresponding instruction to the electronic device 200 based on the short-range communication connection. After receiving the instruction, the electronic device 200 may automatically download, based on the instruction, an installation package file corresponding to the application from the server 200. and automatically install the application. In this way, cross-device application installation is implemented.

The following describes in detail the application installation method.

**FIG. 5A to FIG. 5C** **show an example of a specific procedure of another application installation method according to an embodiment of this application.**

As shown in FIG. 5A to FIG. 5C, the method may be applied to a communication system including an electronic device 100, an electronic device 200, and a server 200. The server 200 may be a distribution server, the electronic device 100 may be a PC, and the electronic device 200 may be a mobile phone. Both the electronic device 100 and the electronic device 200 may include an application downloading module and a device discovery module. The application downloading module is configured to download and install various applications. For example, the application downloading module of the electronic device 100 may be an application market of a PC, and the application downloading module of the electronic device 200 may be an application market of a mobile phone. The device discovery module is configured to be responsible for mutual discovery of nearby devices and establish a short-range communication connection between different electronic devices. For example, the device discovery module may be a Wi-Fi module, a Bluetooth module, an NFC module, or the like. The following describes in detail specific steps of the method.

### Phase 1: a communication connection establishment phase

S501: The electronic device 100 establishes a short-range communication connection to the electronic device 200.

In this embodiment of this application, a manner in which the electronic device 100 establishes the short-range communication connection to the electronic device 200 may include but is not limited to a manner of scanning a QR code, touching through near field communication (near field communication, NFC), searching for a Bluetooth device, or the like. In this embodiment of this application, a type of the short-range communication connection established between the electronic device 100 and the electronic device 200 may include but is not limited to Wi-Fi, Bluetooth, NFC, and the like.

The electronic device 100 and the electronic device 200 may be devices that log in to a same account or devices that log in to different accounts.

### Phase 2: a phase of obtaining and displaying application information and device information

S502 to S504: The electronic device 100 detects an operation of searching for an application 1 by a user, and in response to the operation, the electronic device 100 sends, to the server 200, a request for obtaining related information of the application 1. After receiving the request, the server 200 sends the related information of the application 1 to the electronic device 100, where the related information includes a device type applicable to the application 1, and names of application installation packages, download links, and the like that are of the application 1 corresponding to different device types.

For a specific execution process of step S502 to step S504, refer to related content in step S307 to step S309 in the embodiment shown in FIG. 3A-1 to FIG. 3A-3. Details are not described herein again.

In some embodiments, before step S503, the method may further include: The electronic device 100 logs in to an account (for example, an account 1) on the application downloading module of the electronic device 100.

S505 to S508: The application downloading module of the electronic device 100 sends, to the device discovery module of the electronic device 100, an instruction for obtaining device information of a nearby device. After receiving the instruction, the device discovery module of the electronic device 100 sends, to the device discovery module of the electronic device 200, a request for obtaining device information of a nearby device. After receiving the request, the device discovery module of the electronic device 200 sends device information 2 to the device discovery module of the electronic device 100. The device information 2 includes information like a device name 2 and a device type 2. After receiving the device information 2, the device discovery module of the electronic device 100 sends the device information 2 to the application downloading module of the electronic device 100.

Specifically, after the related information of the application 1 is obtained, the application downloading module of the electronic device 100 may send the instruction for obtaining device information of a nearby device to the device discovery module of the electronic device 100. After receiving the instruction, the device discovery module of the electronic device 100 may send the request for obtaining device information of a nearby device to another electronic device near the electronic device 100. For example, if the another nearby electronic device includes the electronic device 200, the device discovery module of the electronic device 100 may send the request to the electronic device 200. After receiving the request, the device discovery module of the electronic device 200 may send the device information 2 (namely, device information of the electronic device 200) to the device discovery module of the electronic device 100. The device information 2 includes information like the device name 2 (namely, a device name of the electronic device 200) and the device type 2 (namely, a device type of the electronic device 200). After receiving the device information 2, the device discovery module of the electronic device 100 may send the device information 2 to the application downloading module of the electronic device 100.

In this embodiment of this application, the another electronic device near the electronic device 100 may be an electronic device that establishes a short-range communication connection to the electronic device 100.

Table 3 shows an example of a local device (namely, the electronic device 100) and device information (for example, a device name and a device type) of a nearby device (for example, the electronic device 200) obtained by the local device.

It can be learned from Table 3 that there are two local devices and two nearby devices: one is an electronic device (namely, the electronic device 100) whose device name is Huawei Matebook X and whose device type is a PC, and another is an electronic device (namely, the electronic device 200) whose device name is Huawei P40 Pro and whose device type is a mobile phone.

**Table 3**

| Device names | Device types |
|---|---|
| Huawei Matebook X | Personal computer (PC) |
| Huawei P40 Pro | Mobile phone (phone) |

It may be understood that, in Table 3, only an example in which an electronic device near the electronic device 100 is the electronic device 200 is used to show device information of the electronic device 200. There may be more other electronic devices near the electronic device 100, and the electronic device 100 may obtain and record device information of these electronic devices.

It should be noted that a time sequence of performing step S503 and step S504 and performing step S505 to step S508 is not limited in this embodiment of this application. In some embodiments, step S505 to step S508 may be performed first, and then step S503 and step S504 are performed. In some other embodiments, step S503 and step S504 and step S505 to step S508 may be simultaneously performed.

In some embodiments, the electronic device 100 may first perform step S505 to step S508, that is, obtain device information of a nearby device. Then, an execution process of step S503 and step S504 may be the following process: The electronic device 100 sends a request to the server 200 based on the obtained device information, where the request indicates the server 200 to send, to the electronic device 100, a name of an application installation package, a download link, and the like that correspond to the device information. After receiving the request, the server 200 may send, to the electronic device 100, the name of the application installation package, the download link, and the like that correspond to the device information.

S509: The electronic device 100 displays a search result of the application 1 and an obtained device information list of the nearby device, where the device information list includes device information 2.

Specifically, an example in which the application 1 is an "XX video" application is also used. After the electronic device 100 completes step S502 to step S508, that is, after the electronic device 100 obtains the related information of the application 1 and the device information of the nearby device, the electronic device 100 may display the search result of the application 1, for example, the search result 432 of the "XX video" application shown in FIG. 4C as an example. For descriptions of the user interface 430 shown in FIG. 4C, refer to the foregoing related content. Details are not described herein again.

Further, the electronic device 100 may detect an operation (for example, a click operation) performed by the user on the drop-down option 434 shown in FIG. 4C. In response to the operation, the electronic device 100 may display a window 610 shown in FIG. 6A as an example. The window 610 may include a local device and a device information list of nearby devices obtained by the local device.

Optionally, the window 610 may include only a device name of the local device and a device name of the nearby device that is obtained by the local device, for example, a device name Huawei Matebook X of the electronic device 100 and a device name Huawei P40 Pro of the electronic device 200.

### Phase 3: an application download and installation phase

S510 and S511: The electronic device 100 detects an operation that the user selects to install the application 1 on a device corresponding to the device name 2, and in response to the operation, the electronic device 100 determines, based on the device selected by the user, that a device type of the device is the device type 2, and further determines a download link of the application 1 corresponding to the device type 2.

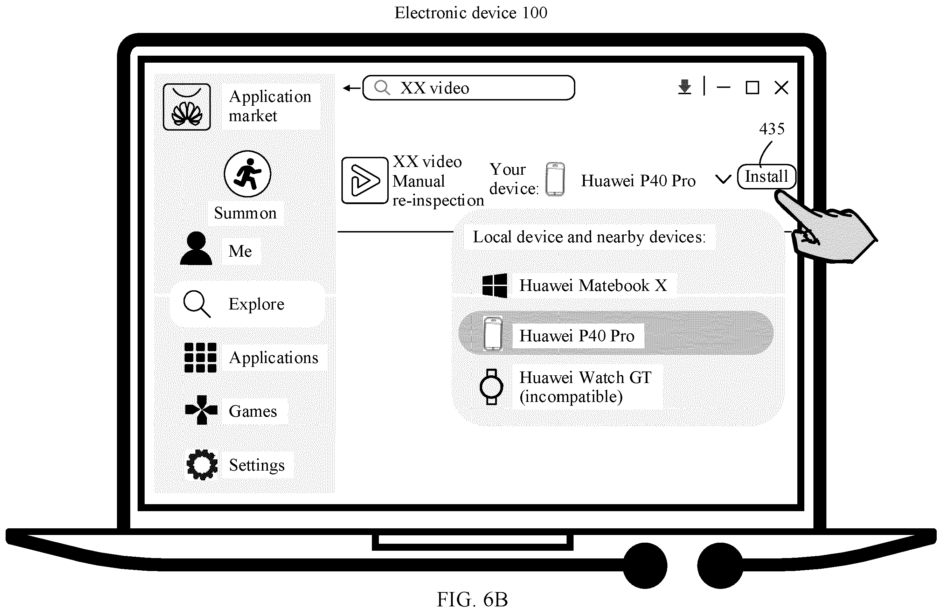

Specifically, an example in which the electronic device 100 installs an "XX video" application on the electronic device 200 is used. A device name of the electronic device 200 is the device name 2, the device name 2 is Huawei P40 Pro, and the application 1 is the "XX video" application. As shown in FIG. 6A, the electronic device 100 may detect the operation that the user selects to install the "XX video" application on the device corresponding to the device name 2 (for example, an operation of clicking, by the user, a Huawei P40 Pro option shown in FIG. 6A and an operation of clicking, by the user, an "Install" option 435 shown in FIG. 6B). In response to the operation, the electronic device 100 sets the Huawei P40 Pro option to a selected state shown in FIG. 6B, that is, the device selected by the user is the Huawei P40 Pro. In addition, because the electronic device 100 obtains, in advance, the device information of the nearby device (refer to Table 3), the electronic device 100 may determine, based on the device selected by the user, that the device type of the device is the device type 2 (namely, a mobile phone). Further, because the electronic device 100 obtains, in advance, the related information of the "XX video" application (refer to Table 2), the electronic device 100 may determine that the download link of the "XX video" application corresponding to the device type 2 is http://BBBBBB.

Optionally, the electronic device 100 may also determine, based on the device type 2, a name of an application installation package of the application 1 corresponding to the device type 2.

In some embodiments, another implementation of a process of displaying an interface and performing a user operation shown in FIG. 6A and FIG. 6B may be a process of displaying an interface and performing a user operation shown in FIG. 4G and FIG. 4H. For details, refer to the foregoing content. Details are not described herein again.

S512 to S515: The application downloading module of the electronic device 100 sends a download instruction 2 to the device discovery module of the electronic device 100, where the instruction includes the device information 2, the download link of the application 1 corresponding to the device type 2, and the like. After receiving the download instruction 2, the device discovery module of the electronic device 100 sends the download instruction 2 to the device discovery module of the electronic device 200, and after receiving the download instruction 2, the device discovery module of the electronic device 200 sends the download instruction 2 to the application downloading module of the electronic device 200. Optionally, after the application downloading module of the electronic device 200 receives the download instruction 2, the electronic device 200 may display prompt information to prompt the user to install the application 1, and may detect an operation that the user agrees to install the application 1.

Specifically, the application downloading module of the electronic device 100 may send the download instruction 2 to the device discovery module of the electronic device 100. The instruction may include but is not limited to the device information (namely, the device information 2) of the electronic device 200, the download link of the application 1 corresponding to the device type 2 (for example, the download link http://BBBBBB of the "XX video" application corresponding to the device type 2), and the like.

The device information 2 may include information like a device name, a device ID, and a media access control address of the electronic device 200.

Optionally, the download instruction 2 may further include a name of an application installation package of the application 1 corresponding to the device type 2.

In this embodiment of this application, the download instruction 2 may further include device information and account information of the electronic device 100.

After receiving the download instruction 2, the device discovery module of the electronic device 100 may send the download instruction 2 to the device discovery module of the electronic device 200.

Optionally, the download instruction 2 may also include only the download link of the application 1 corresponding to the device type 2 and the device name of the electronic device 200.

Optionally, the download instruction 2 may also include only the name of the application installation package of the application 1 corresponding to the device type 2 and the device name of the electronic device 200.

After receiving the download instruction 2, the device discovery module of the electronic device 200 may send the download instruction 2 to the application downloading module of the electronic device 200.

In this way, the electronic device 100 may indicate, through a short-range communication connection established between the electronic device 100 and the electronic device 200, the electronic device 200 to download and install the application 1.

In some embodiments, after the application downloading module of the electronic device 200 receives the download instruction 2, the electronic device 200 may display a window 460 shown in FIG. 4I as an example. The window 460 may include an option 461, an option 462, and prompt information 463, to prompt the user to download and install the application 1. In this way, the user may be given a selection right, and security may also be improved. The electronic device 200 may detect an operation that the user agrees to download and install the application 1 (for example, a tap operation on the option 461), and in response to the operation, the electronic device 200 may perform subsequent steps. A display form of the window 460 may be a push notification, a pop-up window displayed on a user interface (for example, a leftmost screen, a lock screen, or a home screen), or the like. This is not limited in this embodiment of this application.

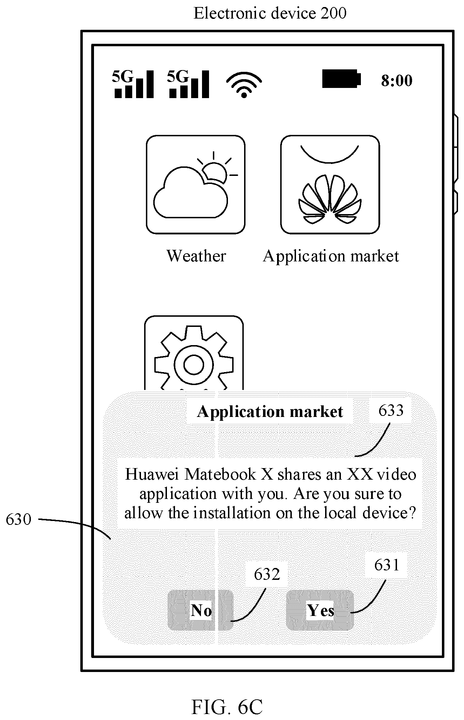

In some other embodiments, after the application downloading module of the electronic device 200 receives the download instruction 2, the electronic device 200 may also display a window 630 shown in FIG. 6C as an example. The window 630 may include an option 631, an option 632, and prompt information 633 that prompts the user to download and install the application 1. The prompt information 633 may include the device information of the electronic device 100 (for example, information like a device name Huawei Matebook X of the electronic device 100), and may further include the account information of the electronic device 100 (for example, an account name for logging in to the electronic device 100). In this way, the user may be given a selection right, and security may also be improved. The electronic device 200 may detect an operation that the user agrees to download and install the application 1 (for example, a tap operation on the option 631), and in response to the operation, the electronic device 200 may perform subsequent steps. A display form of the window 630 may be a push notification, a pop-up window displayed on a user interface (for example, a leftmost screen, a lock screen, or a home screen), or the like. This is not limited in this embodiment of this application.

S516 to S518: The electronic device 200 sends, to the server 200, a request for obtaining an installation package of the application 1 corresponding to the device type 2, where the request includes the download link of the application 1 corresponding to the device type 2. After receiving the request, the server 200 sends, to the electronic device 200, the installation package of the application 1 corresponding to the device type 2. After receiving the installation package, the electronic device 100 installs the application 1.

For a specific execution process of step S516 to step S518, refer to related content in step S318 to step S320 in the embodiment shown in FIG. 3A-1 to FIG. 3A-3. Details are not described herein again.

In some embodiments, before step S514, the method may further include: The electronic device 200 logs in to an account (for example, an account 1) on the application downloading module of the electronic device 200.

S519 to S522: The application downloading module of the electronic device 200 sends, to the device discovery module of the electronic device 200, an instruction indicating that the application 1 is successfully installed. After receiving the instruction, the device discovery module of the electronic device 200 sends the instruction to the device discovery module of the electronic device 100. After receiving the instruction, the device discovery module of the electronic device 100 sends the instruction to the application downloading module of the electronic device 100. After receiving the instruction, the application downloading module of the electronic device 100 displays indication information indicating that the application 1 is successfully installed.

Specifically, after the electronic device 200 successfully installs the application 1, the application downloading module of the electronic device 200 may send, to the application downloading module of the electronic device 100 by using the device discovery module of the electronic device 200 and the device discovery module of the electronic device 100, the instruction indicating that the application 1 is successfully installed, to notify the electronic device 100 that the electronic device 200 has successfully installed the application 1. After receiving the instruction indicating that the application 1 is successfully installed, the electronic device 100 may display indication information 471 that indicates that the application 1 is successfully installed and that is shown in FIG. 4J as an example. The indication information indicates that the electronic device 200 has successfully installed the application 1. That is, the electronic device 100 successfully installs the application 1 on the electronic device 200, to implement cross-device application installation.

In some embodiments, the installation success instruction may alternatively be an installation success message.

For example, the application 1 is the "XX video" application. As shown in FIG. 4K, compared with FIG. 4B, the electronic device 200 displays an icon 422 of a new "XX video" application on a user interface 420, to indicate that the electronic device 200 successfully installs the "XX video" application.

It should be noted that step S519 to step S522 are optional. In some embodiments, step S519 to step S522 may not be performed. That is, after successfully installing the application 1, the electronic device 200 may not notify the electronic device 100, and the electronic device 100 does not need to display the indication information indicating that the application 1 is successfully installed.

In some embodiments, when both the electronic device 100 and the electronic device 200 log in to a same account, another implementation of step S510 to step S522 in the phase 3 shown in FIG. 5A to FIG. 5C may also be step S313 to step S323 in the embodiment shown in FIG. 3A-1 to FIG. 3A-3.

According to the application installation method provided in the foregoing embodiment, a plurality of electronic devices (for example, a local device and one or more peer devices) that are not associated may be associated through a short-range communication connection, and a communication channel between devices is established, to implement a function of installing an application across devices at a near end. It can be learned that this embodiment can achieve a same technical effect as the embodiment shown in FIG. 3A-1 to FIG. 3A-3.

In a possible implementation, the embodiment shown in FIG. 3A-1 to FIG. 3A-3 may be combined with the embodiment shown in FIG. 5A to FIG. 5C. In other words, the electronic device 100 may not only obtain device information of all electronic devices that log in to a same account as the electronic device 100, but also obtain device information of a device near the electronic device 100 (namely, a device that establishes a short-range wireless communication connection to the electronic device 100). Further, the electronic device 100 may display all the device information of these devices, so that the user selects a device/devices on which an application is to be installed. This simultaneously implements a function of installing an application across devices at a remote end and a near end.

In some embodiments, the electronic device 100 may display, for a user to view, an application that has been installed on another electronic device that logs in to a same account as the electronic device 100 and/or that establishes a short-range communication connection to the electronic device 100. In this way, the user may view, by using one electronic device, an application installed on one or more other electronic devices. In addition, the user can avoid triggering an electronic device to perform the foregoing application installation method when forgetting that an application has been installed on the electronic device.

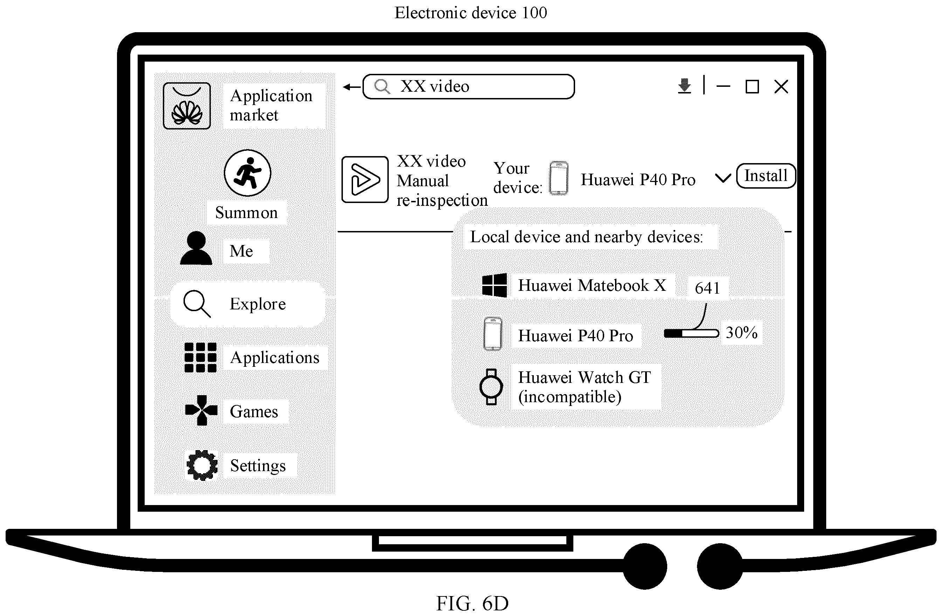

In some other embodiments, as shown in an example in FIG. 6D, the electronic device 100 may display, in real time, an installation progress bar 641 of installing the application 1 on the electronic device 200. It can be learned from the figure that currently, installation progress of the application 1 on the electronic device 200 is 30%. In this way, the user may learn of the installation progress of the application 1 on the electronic device 200 in real time.

In some other embodiments, after the application 1 is successfully installed on the electronic device 200, the electronic device 100 may also display an open option. After the user clicks the option, the electronic device 200 may directly start and run the application 1. In this way, the user may indicate, by operating the electronic device 100, the electronic device 200 to start and run the application 1.

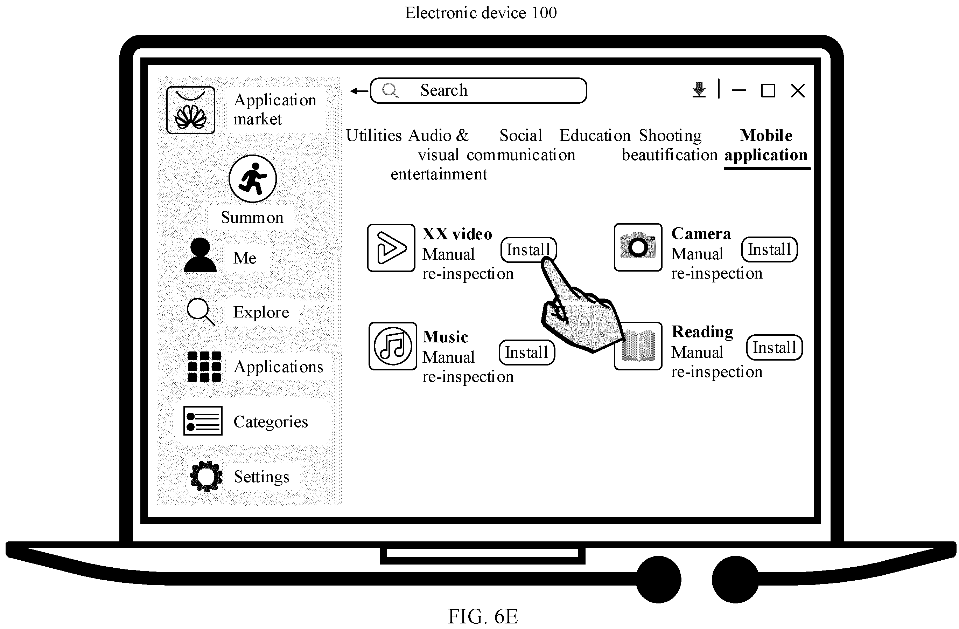

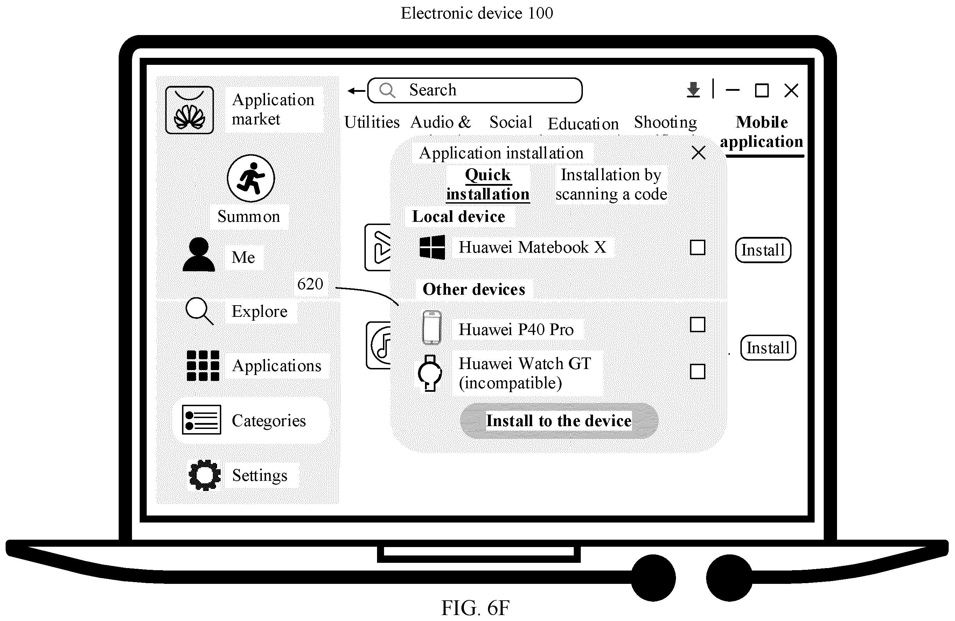

In a possible implementation, "the electronic device 100 detecting an operation of searching for the application 1 by the user" in FIG. 3A-1 to FIG. 3A-3, FIG. 3B-1 and FIG. 3B-2, and FIG. 5A to FIG. 5C may be replaced with "the electronic device 100 detecting an operation that the user selects to install the application 1". For example, the electronic device 100 may display a user interface of an application market shown in FIG. 6E, and one or more applications (for example, an "XX video" application, a "Music" application, a "Camera" application, and a "Reading" application) may be displayed on the user interface. The electronic device 100 may detect an operation (for example, an operation of clicking an "Install" option corresponding to the "XX video" application) that the user selects to install the application 1 (for example, the "XX video" application). In response to the operation, the electronic device 100 may display a window 620 shown in FIG. 6F as an example.

In this embodiment of this application, a first electronic device may be an electronic device 100, a second electronic device may be an electronic device 200, a third electronic device is an electronic device 300, a first application may be an application 1 (for example, an "XX video" application), a server may be a server 100 and a server 200, and a first account may be an account 1. A first interface may be the user interface shown in FIG. 4C, or the user interface shown in FIG. 6E, and a second interface may be the window 440 shown in FIG. 4D, the window 450 shown in FIG. 4G, or the window 610 shown in FIG. 6A. A first request may be the download instruction 1 in FIG. 3A-1 to FIG. 3A-3 or the download instruction 2 in FIG. 5A to FIG. 5C, a second request may be a download instruction 3 (that is, including device information of the electronic device 300, a download link of the application 1 corresponding to a device type of the electronic device 300, and the like), and a third request may be a request for obtaining related information of the application 1. A first operation may be an operation of clicking, by the user, the option 434 (which may also be referred to as a first option) shown in FIG. 4C or an operation of clicking, by the user, the "Install" option (which may also be referred to as a first option) of the "XX video" application shown in FIG. 6E. A second operation may be an operation of clicking, by the user, the "Install" option in FIG. 4E, or an operation of clicking, by the user, an installation-on-device option in FIG. 4H, or an operation of clicking, by the user, a device option (for example, a Huawei P40 Pro option) shown in FIG. 4D. A second option may be a device option (for example, a Huawei Matebook X option) of the electronic device 100. The second option may be a device option (for example, a Huawei P40 Pro option) of the electronic device 200. A fourth option may be a device option of the electronic device 300. Status information of the first application may be indication information indicating that the first application is installed or not installed on the first electronic device and the second electronic device, and first prompt information may be the prompt information 463 shown in FIG. 4I, or the prompt information 633 shown in FIG. 6C.

The following describes a structure of an electronic device 100 according to an embodiment of this application.

**FIG. 7** **shows an example of a structure of an electronic device 100 according to an embodiment of this application.**

As shown in FIG. 7, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on instruction operation code and a timing signal, and complete control of instruction fetching and instruction execution.

The memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transfer an audio signal to the wireless communication module 160 through the I2S interface, to implement a function of answering a call through a Bluetooth headset.

The PCM interface may also be used for audio communication, to sample, quantize, and code an analog signal. In some embodiments, the audio module 170 may be coupled to the wireless communication module 160 through a PCM bus interface. In some embodiments, the audio module 170 may also transfer an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to a peripheral component like the display 194 or the camera 193. The MIPI interfaces include a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may be further configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, may be configured to transmit data between the electronic device 100 and a peripheral device, or may be configured to connect to a headset, to play audio by using the headset. The interface may be further configured to connect to another terminal device, for example, an AR device.

It may be understood that an interface connection relationship between the modules shown in this embodiment of this application is merely an example for description, and does not constitute a structural limitation on the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may supply power to the electronic device 100 by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (an electric leakage or an impedance). In some other embodiments, the power management module 141 may also be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed, to improve antenna usage. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication like 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more devices that integrate at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the electronic device 100 is coupled to the mobile communication module 150, and the antenna 2 is coupled to the wireless communication module 160, so that the electronic device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution. LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculations for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is opened, light is transferred to a camera photosensitive element through a lens, an optical signal is converted into an electrical signal, and the camera photosensitive element transfers the electrical signal to the ISP for processing, to convert the electrical signal into an image visible to a naked eye. The ISP may further perform algorithm optimization on noise of an image, brightness, and complexion. The ISP may further optimize parameters such as an exposure and a color temperature of a photographing scene. In some embodiments, the ISP may be disposed in the camera 193.

The camera 193 is configured to capture a static image or a video. An object generates an optical image by using the lens and is projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may further process another digital signal in addition to a digital image signal. For example, when the electronic device 100 selects a frequency, the digital signal processor is configured to perform Fourier transform on frequency energy and the like.

The video codec is configured to compress or decompress a digital video. The electronic device 100 may support one or more video codecs. In this way, the electronic device 100 may play or record videos in a plurality of coding formats, for example, a moving picture experts group (moving picture experts group, MPEG) 1, an MPEG 2, an MPEG 3 and an MPEG 4.

The NPU is a neural-network (neural-network, NN) computing processor. The NPU quickly processes input information by referring to a structure of a biological neural network, for example, a transmission mode between human brain neurons, and may further continuously perform self-learning. The NPU can implement applications such as intelligent cognition of the electronic device 100. For example, image recognition, facial recognition, speech recognition, and a text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code, where the executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function and an image playing function), and the like. The data storage area may store data (like audio data and a phone book) created during use of the electronic device 100. In addition, the internal memory 121 may include a high speed random access memory, and may further include a non-volatile memory, for example, at least one magnetic disk storage device, a flash storage device, or a universal flash memory (universal flash storage, UFS).

The electronic device 100 may implement an audio function by using the audio module 170, the speaker 170A, the receiver 170B, the microphone 170C, the headset jack 170D, the application processor, and the like. For example, playing music, and recording.

The audio module 170 is configured to convert a digital audio signal into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The electronic device 100 may listen to music or answer a hands-free call through the speaker 170A.

The receiver 170B, also referred to as an "earpiece", is configured to convert an audio electrical signal into a sound signal. When the electronic device 100 answers a call or receives voice information, the receiver 170B may be put close to a human ear to listen to a voice.

The microphone 170C, also referred to as a "mike" or a "voice tube", is configured to convert a sound signal into an electrical signal. When making a call or sending voice information, a user may make a sound by moving a human mouth close to the microphone 170C to input a sound signal into the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source. This implements a directional recording function and the like.

The headset jack 170D is configured to connect to a wired headset. The headset interface 170D may be the USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, a capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may also calculate a touch position based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing a message is executed. When a touch operation whose touch operation intensity is greater than or equal to the first pressure threshold is performed on the Messages icon, an instruction for creating a new message is executed.

The gyroscope sensor 180B may be configured to determine a motion posture of the electronic device 100. In some embodiments, angular velocities of the electronic device 100 around three axes (namely, x, y, and z axes) may be determined by using the gyroscope sensor 180B. The gyroscope sensor 180B may be configured to perform image stabilization during photographing. For example, when a shutter is pressed, the gyroscope sensor 180B detects an angle at which the electronic device 100 jitters, calculates, based on the angle, a distance for which a lens module needs to compensate, and enables the lens to cancel the jitter of the electronic device 100 through reverse motion, to implement image stabilization. The gyroscope sensor 180B may be further used in a navigation scenario and a motion sensing game scenario.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a flip phone, the electronic device 100 can detect opening and closing of a flip cover based on the magnetic sensor 180D. Further, a feature like automatic unlocking upon opening of the flip cover is set based on a detected opening or closing state of the flip cover.

The acceleration sensor 180E may detect magnitudes of an acceleration of the electronic device 100 in various directions (usually on three axes). A magnitude and a direction of gravity may be detected when the electronic device 100 is still. The acceleration sensor 180E may be further configured to identify a posture of the electronic device 100, and is applied to an application like landscape/portrait switching and a pedometer.

The distance sensor 180F is configured to measure a distance. The electronic device 100 may measure a distance by using infrared or laser. In some embodiments, in a photographing scene, the electronic device 100 may perform ranging by using the distance sensor 180F to implement fast focusing.

The optical proximity sensor 180G may include, for example, a light emitting diode (LED) and an optical detector such as a photodiode. The light emitting diode may be an infrared light emitting diode. The electronic device 100 emits infrared light by using the light emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a flip cover mode or a pocket mode to automatically unlock or lock a screen.

The ambient light sensor 180L is configured to sense ambient light luminance. The electronic device 100 may adaptively adjust brightness of the display 194 based on sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to prevent an accidental touch.

The fingerprint sensor 180H is configured to collect a fingerprint. The electronic device 100 may use a feature of a collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy by using a temperature detected by the temperature sensor 180J. For example, when a temperature reported by the temperature sensor 180J exceeds a threshold, the electronic device 100 lowers performance of a processor near the temperature sensor 180J, to reduce power consumption and implement thermal protection. In some other embodiments, when the temperature is lower than another threshold, the electronic device 100 heats the battery 142, to avoid a case in which the electronic device 100 is abnormally shut down due to a low temperature. In some other embodiments, when the temperature is lower than still another threshold, the electronic device 100 boosts an output voltage of the battery 142, to avoid an abnormal shutdown caused by a low temperature.

The touch sensor 180K is also referred to as a "touch panel". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer a detected touch operation to the application processor, to determine a touch event type. A visual output related to the touch operation may be provided on the display 194. In some other embodiments, the touch sensor 180K may be also disposed on a surface of the electronic device 100 at a position different from a position of the display 194.

The bone conduction sensor 180M may obtain a vibration signal. In some embodiments, the bone conduction sensor 180M may obtain a vibration signal of a vibration bone of a human vocal part. The bone conduction sensor 180M may also contact a human pulse to receive a blood pressure beating signal. In some embodiments, the bone conduction sensor 180M may also be disposed in a headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch key. The electronic device 100 may receive a button input, and generate a signal input of a button related to a user setting and function control of the electronic device 100.

The motor 191 may generate a vibration prompt. The motor 191 may be used for an incoming call vibration prompt, or may be used for a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may further be customized.

The indicator 192 may be an indicator light, and may be configured to indicate a charging state and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using the SIM card, to implement functions such as a call and data communication. In some embodiments, the electronic device 100 uses an eSIM, namely, an embedded SIM card. The eSIM card may be embedded in the electronic device 100, and cannot be separated from the electronic device 100.

It should be understood that the electronic device 100 shown in FIG. 7 is merely an example, and the electronic device 100 may have more or fewer components than those shown in FIG. 7, may combine two or more components, or may have different component configurations. Various components shown in FIG. 7 may be implemented in hardware including one or more signal processing circuits and/or application-specific integrated circuits, in software, or in a combination of hardware and software.

A structure of the electronic device 200 may be the same as or similar to the structure of the electronic device 100. For related content of the structure of the electronic device 200, refer to related text descriptions of the structure of the electronic device 100 shown in FIG. 7. Details are not described herein again.

The following describes a software structure of an electronic device 100 according to an embodiment of this application.

**FIG.** 8 shows **an** example of a software structure of **an** electronic device **100** according to **an embodiment** of this application.

As shown in FIG. 8, a software system of the electronic device 100 may use a layered architecture, an event-driven architecture, a microkernel architecture, a microservice architecture, or a cloud architecture. In this embodiment of this application, an Android system with a layered architecture is used as an example to describe the software structure of the electronic device 100.

The layered architecture divides software into layers, and each layer has a clear role and responsibility. The layers communicate with each other through software interfaces. In some embodiments, the Android system is divided into four layers from top to bottom: an application layer, an application framework layer, Android runtime (Android runtime), a system library, and a kernel layer.

The application layer may include a series of application packages.

As shown in FIG. 8, the application package may include applications such as Camera, Gallery, Calendar, Phone, Map, **Application market,** WLAN, Bluetooth, Music, Video, and Messages.

The application framework layer provides an application programming interface (application programming interface, API) and a programming framework for the application at the application layer. The application framework layer includes some predefined functions.

As shown in FIG. 8, the application framework layer may include a window manager, a content provider, a view system, a phone manager, a resource manager, a notification manager, and the like.

The window manager is used to manage a window program. The window manager can obtain a size of a display, determine whether there is a status bar, lock a screen, capture a screen, and the like.

The content provider is used to store and obtain data and make the data accessible to an application. The data may include a video, an image, an audio, a call made and answered, a browsing history and a bookmark, a phone book, and the like.

The view system includes visual controls such as a control for displaying a text and a control for displaying a picture. The view system may be used to build an application. A display interface may include one or more views. For example, a display interface including a notification icon of Messages may include a text display view and a picture display view.

The phone manager is configured to provide a communication function of the electronic device 100, for example, management of a call status (including answering, declining, or the like).

The resource manager provides various resources for an application, such as a localized character string, an icon, a picture, a layout file, and a video file.

The notification manager enables an application to display notification information in a status bar, and may be used to convey a notification type message. The message may automatically disappear after a short pause without user interaction. For example, the notification manager is used to notify download completion, a message notification, and the like. The notification manager may alternatively be a notification that appears in a top of a status bar in a system in a form of a graph or a scroll bar text, for example, a notification of an application running on a background or a notification that appears on a screen in a form of a dialog window. For example, text information is prompted in the status bar, a prompt tone is produced, the electronic device vibrates, or an indicator light blinks.

Android Runtime includes a kernel library and virtual machine. The Android runtime is responsible for scheduling and managing the Android system.

The kernel library includes two parts: a function that needs to be called in Java language, and a kernel library of Android.

The application layer and the application framework layer run in the virtual machine. The virtual machine executes Java files at the application layer and the application framework layer as binary files. The virtual machine is used to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video coding formats, for example: MPEG 4, H.264, MP3, AAC, AMR, JPG and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, a Bluetooth driver, and a sensor driver.

With reference to a photographing capture scenario, the following describes an example of a working process of software and hardware of the electronic device 100.

When the touch sensor 180K receives a touch operation, a corresponding hardware interrupt is sent to the kernel layer. The kernel layer processes the touch operation into an original input event (including information like touch coordinates and a timestamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

A software structure of the electronic device 200 may be the same as or similar to the software structure of the electronic device 100. For related content of the software structure of the electronic device 200, refer to related text descriptions of the software structure of the electronic device 100 shown in FIG. 8. Details are not described herein again.

The following describes another structure of an electronic device 100 according to an embodiment of this application.

**FIG. 9** **shows an example of another structure of an electronic device 100 according to an embodiment of this application.**

As shown in FIG. 9, the electronic device 100 may include an application downloading module 901 and a device discovery module 902.

The application downloading module 901 may be configured to: download and install various applications, install various applications for another device, receive and/or send a related instruction, request, and the like. In this embodiment of this application, the application downloading module 901 may be an application market on the electronic device 100.

The device discovery module 902 may be configured to: be responsible for mutual discovery of nearby devices, establish a short-range communication connection between different electronic devices, and receive and/or send a related instruction, request, and the like. In this embodiment of this application, the device discovery module 902 may be a Wi-Fi module, a Bluetooth module, an NFC module, or the like.

For more details about functions and working principles of the electronic device 100, refer to related content in the foregoing embodiments. Details are not described herein again.

The electronic device 200 may also include an application downloading module and a device discovery module. For more details about functions and working principles of the two modules, refer to related content in the foregoing embodiments. Details are not described herein again.

The following describes a structure of a server 200 provided in an embodiment of this application.

**FIG. 10** **is a schematic diagram of a structure of a server 200 according to an embodiment of this application.**

As shown in FIG. 10, the server 200 may include one or more processors 1001, a memory 1002, a communication interface 1003, a transmitter 1005, a receiver 1006, a coupler 1007, and an antenna 1008. These components may be connected through a bus 1004 or in another manner. In FIG. 10, an example in which the components are connected through a bus is used.

The communication interface 1003 may be used by the server 200 to communicate with another communication device, for example, the electronic device 100 or the electronic device 200. Specifically, the communication interface 1003 may be a 3G communication interface, a 4G communication interface, a 5G communication interface, a future new radio communication interface, or the like. In addition to a wireless communication interface, the server 200 may be further configured with a wired communication interface 1003, for example, a local access network (local access network, LAN) interface. The transmitter 1005 may be configured to transmit a signal output by the processor 1001. The receiver 1006 may be configured to receive a mobile communication signal received by the antenna 1008.

In some embodiments of this application, the transmitter 1005 and the receiver 1006 may be considered as wireless modems. In the server 200, there may be one or more transmitters 1005 and receivers 1006. The antenna 1008 may be configured to convert electromagnetic energy in a transmission line into an electromagnetic wave in free space, or convert an electromagnetic wave in free space into electromagnetic energy in a transmission line. The coupler 1007 is configured to: divide a mobile communication signal received by the antenna 1008 into a plurality of signals, and allocate the plurality of signals to a plurality of receivers 1006.

The memory 1002 is coupled to the processor 1001, and is configured to store various software programs and/or a plurality of groups of instructions. Specifically, the memory 1002 may include a high-speed random access memory, and may also include a non-volatile memory, for example, one or more disk storage devices, a flash memory device, or another non-volatile solid-state storage device. The memory 1002 may store a network communication program. The network communication program may be used to communicate with one or more additional devices, one or more terminal devices, and one or more network devices.

In some embodiments of this application, the memory 1002 may be configured to store a program for implementing, on a server 200 side, the application installation method provided in one or more embodiments of this application. For implementation of the application installation method provided in one or more embodiments of this application, refer to the foregoing embodiments.

The processor 1001 may be configured to read and execute computer-readable instructions. Specifically, the processor 1001 may be configured to: invoke a program stored in the memory 1002, for example, the program for implementing, on a server 200 side, the application installation method provided in one or more embodiments of this application, and execute instructions included in the program.

It should be noted that the server 200 shown in FIG. 10 is merely an implementation of this embodiment of this application. In actual application, the server 200 may further include more or fewer components. This is not limited herein.

For more details about functions and working principles of the server 200, refer to related content in the foregoing embodiments, and details are not described herein again.

The structure of the server 100 may be the same as or similar to the structure of the server 200. For related content of the structure of the server 100, refer to related text descriptions of the structure of the server 200 shown in FIG. 10. Details are not described herein again.

All or some of the foregoing embodiments may be implemented by using software, hardware, firmware, or any combination thereof. When software is used for implementation, the implementation may be totally or partially implemented in a form of a computer program product. The computer program product includes one or more computer instructions. When computer program instructions are loaded and executed on a computer, all or some of the procedures or functions according to this application are generated The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or a part of the procedures in the methods in embodiments are implemented The procedures may be implemented by a computer program instructing related hardware. The program may be stored in a computer-readable storage medium. When the program is executed, the procedure of each method embodiment described above may be included. The foregoing storage medium includes any medium that can store program code, for example, a ROM, a random access memory RAM, a magnetic disk, or an optical disc.

## Claims

1. An application installation method performed by a first electronic device (100), wherein the method comprises:
• detecting (S 301) an operation of logging in to an account by a user;
• in response thereto, sending (S 302) an account name of the account and device information of the first electronic device to a first server (100);
• after having sent the account name of the account and the device information of the first electronic device to the first server, detecting (S 307) an operation on the first electronic device of searching for a first application by the user;
• in response to the detection of the operation of searching for the first application by the user, sending (S 308) a request for obtaining related information of the first application to a second server (200);
• in response thereto, receiving (S 309) the related information of the first application from the second server, wherein the related information comprises device types applicable to the first application, and download links of the first application corresponding to the different device types;
• after having received the related information of the first application from the second server, sending (S 310), to the first server, a request for obtaining device information of a second electronic device (200) that has already logged into the first account;
• in response thereto, receiving (S 311) the device information of the second electronic device that has already logged into the first account;
• after having received the device information of the second electronic device, displaying (S 312) the first application as a search result and the received device information of the second electronic device that has already logged into the first account;
• in response thereto, detecting (S 313) an operation on the first electronic device that the user selects to install the first application on the second electronic device;
• after having detected the operation on the first electronic device, determining (S 314) that a device type of the second electronic device is a second device type, and determining (S 314), among the received download links, a download link of the first application corresponding to the determined device type; and
• in response to the determination of the download link of the first application corresponding to the determined device type, sending (S315, S316) a download instruction to the second electronic device via the second server, wherein the download instruction includes the determined download link of the first application corresponding to the determined device type of the second electronic device.

2. The method according to claim 1, wherein before the searching for the first application by the user, the method further comprises a step of
∘ obtaining a keyword entered by the user, wherein the searching for the first application by the user is a searching for the first application based on the keyword.

3. The method according to any one of claims 1 to 2, wherein the method further comprises:
∘ after having sent the download instruction to the second electronic device via the second server, receiving a message from the second electronic device via the second server that indicates that the first application is now successfully installed on the second electronic device, and displaying indication information indicating that the second electronic device has successfully installed the first application.

4. The method according to claim 1, wherein installation progress information of the first application is displayed on the first electronic device during an installation of the first application on the second electronic device.

5. An electronic device (100), wherein the electronic device (100) comprises one or more processors (110) and one or more memories (121), the one or more memories (121) are coupled to the one or more processors (110), the one or more memories (121) are configured to store computer program code, the computer program code comprises computer instructions, and when the one or more processors (110) execute the computer instructions, the electronic device (100) is caused to perform the method according to any one of claims 1 to 4.

6. A computer storage medium, wherein the computer storage medium stores a computer program, the computer program comprises program instructions, and when the program instructions are run on an electronic device, the electronic device is caused to perform the method according to any one of claims 1 to 4.

## Patentansprüche

1. Anwendungsinstallationsverfahren, das durch eine erste elektronische Vorrichtung (100) durchgeführt wird,
wobei das Verfahren Folgendes umfasst:
• Erkennen (S 301) eines Vorgangs zum Anmelden bei einem Konto durch einen Benutzer;
• als Reaktion darauf Senden (S 302) eines Kontonamens des Kontos und von Vorrichtungsinformationen der ersten elektronischen Vorrichtung an einen ersten Server (100);
• nachdem der Kontoname des Kontos und die Vorrichtungsinformationen der ersten elektronischen Vorrichtung an den ersten Server gesendet worden sind, Erkennen (S 307) eines Vorgangs auf der ersten elektronischen Vorrichtung zum Suchen nach einer ersten Anwendung durch den Benutzer;
• als Reaktion auf die Erkennung des Vorgangs zum Suchen nach der ersten Anwendung durch den Benutzer, Senden (S 308) einer Anforderung zum Erlangen von zugehörigen Informationen der ersten Anwendung an einen zweiten Server (200);
• als Reaktion darauf Empfangen (S 309) der zugehörigen Informationen der ersten Anwendung von dem zweiten Server, wobei die zugehörigen Informationen die Vorrichtungstypen, die für die erste Anwendung anwendbar sind, und die Download-Links der ersten Anwendung, die den verschiedenen Vorrichtungstypen entsprechen, umfassen;
• nachdem die zugehörigen Informationen der ersten Anwendung von dem zweiten Server empfangen worden sind, Senden (S 310), an den ersten Server, einer Anforderung zum Erlangen von Vorrichtungsinformationen einer zweiten elektronischen Vorrichtung (200), die sich bereits in dem ersten Konto angemeldet hat;
• als Reaktion darauf Empfangen (S 311) der Vorrichtungsinformationen der zweiten elektronischen Vorrichtung, die sich bereits in dem ersten Konto angemeldet hat;
• nachdem die Vorrichtungsinformationen der zweiten elektronischen Vorrichtung empfangen worden sind, Darstellen (S 312) der ersten Anwendung als ein Suchergebnis und der empfangenen Vorrichtungsinformationen der zweiten elektronischen Vorrichtung, die sich bereits in dem ersten Konto angemeldet hat;
• als Reaktion darauf, Erkennen (S 313) eines Vorgangs auf der ersten elektronischen Vorrichtung, die der Benutzer auswählt, um die erste Anwendung auf der zweiten elektronischen Vorrichtung zu installieren;
• nachdem der Betrieb der ersten elektronischen Vorrichtung erkannt worden ist, Feststellen (S 314), dass es sich bei dem Vorrichtungstyp der zweiten elektronischen Vorrichtung um einen zweiten Vorrichtungstyp handelt, und Feststellen (S 314), unter den empfangenen Download-Links, eines Download-Links der ersten Anwendung, der dem festgestellten Vorrichtungstyp entspricht; und
• als Reaktion auf die Feststellung des Download-Links der ersten Anwendung, der dem festgestellten Vorrichtungstyp entspricht, Senden (S315, S316) einer Download-Anweisung an die zweite elektronische Vorrichtung über den zweiten Server, wobei die Download-Anweisung den festgestellten Download-Link der ersten Anwendung, der dem festgestellten Vorrichtungstyp der zweiten elektronischen Vorrichtung entspricht, beinhaltet.

2. Verfahren nach Anspruch 1, wobei das Verfahren vor dem Suchen nach der ersten Anwendung durch den Benutzer ferner einen Schritt für Folgendes umfasst
∘ Erlangen eines durch den Benutzer eingegebenen Schlüsselworts, wobei es sich bei dem Suchen nach der ersten Anwendung durch den Benutzer um ein Suchen nach der ersten Anwendung basierend auf dem Schlüsselwort handelt.

3. Verfahren nach einem der Ansprüche 1 bis 2, wobei das Verfahren ferner Folgendes umfasst:
∘ nachdem die Download-Anweisung an die zweite elektronische Vorrichtung über den zweiten Server gesendet worden ist, Empfangen einer Nachricht von der zweiten elektronischen Vorrichtung über den zweiten Server, die anzeigt, dass die erste Anwendung nun erfolgreich auf der zweiten elektronischen Vorrichtung installiert ist, und Darstellen von Anzeigeinformationen, die anzeigen, dass die zweite elektronische Vorrichtung die erste Anwendung erfolgreich installiert hat.

4. Verfahren nach Anspruch 1, wobei Informationen über den Installationsfortschritt der ersten Anwendung auf der ersten elektronischen Vorrichtung während einer Installation der ersten Anwendung auf der zweiten elektronischen Vorrichtung dargestellt werden.

5. Elektronische Vorrichtung (100), wobei die elektronische Vorrichtung (100) einen oder mehrere Prozessoren (110) und einen oder mehrere Speicher (121) umfasst, der eine oder die mehreren Speicher (121) an den einen oder die mehreren Prozessoren (110) gekoppelt sind, der eine oder die mehreren Speicher (121) dazu konfiguriert sind, einen Computerprogrammcode zu speichern, der Computerprogrammcode Computeranweisungen umfasst und, wenn der eine oder die mehreren Prozessoren (110) die Computeranweisungen ausführen, die elektronische Vorrichtung (100) dazu veranlasst wird, das Verfahren nach einem der Ansprüche 1 bis 4 durchzuführen.

6. Computerspeichermedium, wobei das Computerspeichermedium ein Computerprogramm speichert, das Computerprogramm Programmanweisungen umfasst und, wenn die Programmanweisungen auf einer elektronischen Vorrichtung ausgeführt werden, die elektronische Vorrichtung dazu veranlasst wird, das Verfahren nach einem der Ansprüche 1 bis 4 durchzuführen.

## Revendications

1. Procédé d'installation d'une application réalisée par un premier dispositif électronique (100),
dans lequel le procédé comprend :
• la détection (S 301) d'une opération de connexion à un compte par un utilisateur ;
• en réponse à cela, l'envoi (S 302) d'un nom de compte du compte et des informations de dispositif du premier dispositif électronique à un premier serveur (100) ;
• après avoir envoyé le nom de compte du compte et les informations de dispositif du premier dispositif électronique au premier serveur, la détection (S 307) d'une opération sur le premier dispositif électronique de recherche d'une première application par l'utilisateur ;
• en réponse à la détection de l'opération de recherche de la première application par l'utilisateur, l'envoi (S 308) d'une demande pour obtenir des informations relatives à la première application à un second serveur (200) ;
• en réponse à cela, la réception (S 309) des informations relatives à la première application à partir du second serveur, dans lequel les informations relatives comprennent les types de dispositifs applicables à la première application et les liens de téléchargement de la première application correspondant aux différents types de dispositifs ;
• après avoir reçu les informations relatives à la première application à partir du second serveur, l'envoi (S 310), au premier serveur, d'une demande d'obtention d'informations de dispositif d'un second dispositif électronique (200) qui s'est déjà connecté au premier compte ;
• en réponse à cela, la réception (S 311) des informations de dispositif du second dispositif électronique qui s'est déjà connecté au premier compte ;
• après avoir reçu les informations de dispositif du second dispositif électronique, l'affichage (S 312) de la première application comme résultat de recherche et des informations reçues de dispositif du second dispositif électronique qui s'est déjà connecté au premier compte ;
• en réponse à cela, la détection (S 313) d'une opération sur le premier dispositif électronique que l'utilisateur sélectionne pour installer la première application sur le second dispositif électronique ;
• après avoir détecté l'opération sur le premier dispositif électronique, la détermination (S 314) qu'un type de dispositif du second dispositif électronique est un second type de dispositif, et la détermination (S 314), parmi les liens de téléchargement reçus, d'un lien de téléchargement de la première application correspondant au type de dispositif déterminé ; et
• en réponse à la détermination du lien de téléchargement de la première application correspondant au type de dispositif déterminé, l'envoi (S315, S316) d'une instruction de téléchargement au second dispositif électronique par le biais du second serveur, dans lequel l'instruction de téléchargement comporte le lien de téléchargement déterminé de la première application correspondant au type de dispositif déterminé du second dispositif électronique.

2. Procédé selon la revendication 1, dans lequel avant la recherche de la première application par l'utilisateur, le procédé comprend en outre une étape
∘ d'obtention d'un mot-clé entré par l'utilisateur, dans lequel la recherche de la première application par l'utilisateur est une recherche de la première application sur la base du mot-clé.

3. Procédé selon l'une quelconque des revendications 1 et 2, dans lequel le procédé comprend en outre :
∘ après avoir envoyé l'instruction de téléchargement au second dispositif électronique par le biais du second serveur, la réception d'un message à partir du second dispositif électronique par le biais du second serveur indiquant que la première application est maintenant installée avec succès sur le second dispositif électronique, et l'affichage des informations d'indication indiquant que le second dispositif électronique a installé avec succès la première application.

4. Procédé selon la revendication 1, dans lequel les informations de progression de l'installation de la première application sont affichées sur le premier dispositif électronique pendant l'installation de la première application sur le second dispositif électronique.

5. Dispositif électronique (100), dans lequel le dispositif électronique (100) comprend un ou plusieurs processeurs (110) et une ou plusieurs mémoires (121), les une ou plusieurs mémoires (121) sont couplées aux un ou plusieurs processeurs (110), les une ou plusieurs mémoires (121) sont configurées pour stocker un code de programme informatique, le code de programme informatique comprend des instructions informatiques, et lorsque les un ou plusieurs processeurs (110) exécutent les instructions informatiques, le dispositif électronique (100) est amené à réaliser le procédé selon l'une quelconque des revendications 1 à 4.

6. Support de stockage informatique, dans lequel le support de stockage informatique stocke un programme informatique, le programme informatique comprend des instructions de programme et lorsque les instructions de programme sont exécutées sur un dispositif électronique, le dispositif électronique est amené à réaliser le procédé selon l'une quelconque des revendications 1 à 4.
